# EUROPEAN PATENT APPLICATION

(11) **EP 4 848 831 A1**
(43) Date of publication of application: **02.12.2026**
(21) Application number: 24919385.5
(22) Date of filing: 26.01.2024
(51) Int. Cl.: H04W 52/02

(54) **TRANSMISSION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Jinyu, Dongguan, Guangdong 523860 (CN); TANG, Hai, Dongguan, Guangdong 523860 (CN); XU, Weijie, Dongguan, Guangdong 523860 (CN); DING, Yi, Dongguan, Guangdong 523860 (CN)
(74) Representative: Mewburn Ellis LLP
(86) International application number: PCT/CN2024/074321
(87) International publication number: WO 2025/156287

(57) **Abstract**

The present application relates to the field of mobile communications, and discloses a transmission method and apparatus, a device, and a storage medium. The method comprises: a low-power consumption device transmitting information over a Uu link spectrum. The low-power consumption device transmits information over a Uu link spectrum, so as to provide an implementation method of information transmission between the low-power consumption device and an intermediate node and/or a network device; and an implementation method of information transmission between devices in different topological structures corresponding to the low-power consumption device can be determined, thereby supporting a communication system related to the low-power consumption device to be deployed under different topological structures. In the topological structure implemented on the basis of a Uu link, since the Uu link is an existing communication link, the multiplexing of the Uu link spectrum enables the topological structure based on the Uu link spectrum to meet spectrum specifications, thereby reducing implementation costs.

## Description

### TECHNICAL FIELD

The present disclosure relates to the field of mobile communication, and more particularly, to a method and apparatus for transmission, a device, and a storage medium.

### BACKGROUND

With the continuous evolution of wireless communication technology, Internet of Things (IoT) technology is applied to every aspect of production and life. The radio frequency circuit and baseband circuit of a low-power consumption device in the IoT field (e.g., an ambient power enabled IoT (A-IoT) device) are very simple, and the low-power consumption device has numerous advantages such as small size, light weight, low cost, long service life, and maintenance-freeness.

In a communication system in which the low-power consumption device is introduced, the specific implementation of information transmission for the low-power consumption device requires further discussion and research.

### SUMMARY

The present disclosure provides a method and apparatus for transmission, a device, and a storage medium. The technical solution is as follows.

According to an aspect of the present disclosure, there is provided a transmission method, which is performed by a low-power consumption device and includes:
performing, by the low-power consumption device, an information transmission on a Uu link band.

According to another aspect of the present disclosure, there is provided a transmission method, which is performed by an intermediate node and includes:
performing, by the intermediate node, an information transmission with a low-power consumption device on a Uu link band,
where the intermediate node includes a node between the low-power consumption device and a network device.

According to yet another aspect of the present disclosure, there is provided a transmission method, which is performed by a network device and includes:
performing, by the network device, an information transmission with a low-power consumption device on a Uu link band.

According to yet another aspect of the present disclosure, there is provided a transmission apparatus, which includes:
a transmission module, configured to perform an information transmission on a Uu link band.

According to yet another aspect of the present disclosure, there is provided a transmission apparatus, which includes:
a transmission module, configured to perform an information transmission with a low-power consumption device on a Uu link band,
where the apparatus includes a node between the low-power consumption device and a network device.

According to yet another aspect of the present disclosure, there is provided a transmission apparatus, which includes:
a transmission module, configured to perform an information transmission with a low-power consumption device on a Uu link band.

According to yet another aspect of the present disclosure, there is provided a low-power consumption device, which includes: a processor; a transceiver connected to the processor; and a memory for storing executable instructions of the processor, where the low-power consumption device is configured to load and execute the executable instructions to implement the transmission method as described in the above aspect.

According to yet another aspect of the present disclosure, there is provided an intermediate node, which includes: a processor; a transceiver connected to the processor; and a memory for storing executable instructions of the processor, where the intermediate node is configured to load and execute the executable instructions to implement the transmission method as described in the above aspect.

According to yet another aspect of the present disclosure, there is provided a network device, which includes: a processor; a transceiver connected to the processor; and a memory for storing executable instructions of the processor, where the network device is configured to load and execute the executable instructions to implement the transmission method as described in the above aspect.

According to yet another aspect of the present disclosure, there is provided a computer-readable storage medium, having stored therein executable instructions, where the executable instructions are loaded and executed by a processor to implement the transmission method as described in the above aspect.

According to yet another aspect of the present disclosure, there is provided a chip, which includes a programmable logic circuit and/or program instructions, where the chip, when run on a computer device, is configured to implement, based on the programmable logic circuit and/or program instructions, the transmission method as described in the above aspect.

According to yet another aspect of the present disclosure, there is provided a computer program product or a computer program, where the computer program product or the computer program includes computer instructions stored in a computer-readable storage medium, and a processor reads the computer instructions from the computer-readable storage medium and executes the computer instructions, to enable a computer device to perform the transmission method as described in the above aspect.

The technical solutions provided by the embodiments of the present disclosure include at least the following beneficial effects.

By having the low-power consumption device perform the information transmission on the Uu link band, an implementation in which the low-power consumption device performs information transmission with the intermediate node and/or the network device is provided. This can clarify the implementation of information transmission between devices in different topologies corresponding to the low-power consumption device, thereby supporting the communication system in which the low-power consumption device is involved to be capable of being deployed in different topologies. In the topology implemented based on the Uu link, since the Uu link is an existing communication link, reusing the Uu link band can allow the topology based on the Uu link band to meet band regulations, thereby reducing the implementation cost.

### BRIEF DESCRIPTION OF THE DRAWINGS

To describe the technical solutions in the embodiments of the present disclosure more clearly, the drawings required for describing the embodiments will be briefly introduced below. It is apparent that the drawings in the following description are only some embodiments of the present disclosure, and the person of ordinary skill in the art may still derive other drawings from these drawings without creative effort.
FIG. 1 is a schematic diagram of a low-power communication system provided by an exemplary embodiment of the present disclosure.
FIG. 2 is a schematic diagram illustrating radio frequency power harvesting provided by an exemplary embodiment of the present disclosure.
FIG. 3 is a schematic diagram illustrating a backscattering communication process provided by an exemplary embodiment of the present disclosure.
FIG. 4 is a schematic diagram illustrating resistive load modulation provided by an exemplary embodiment of the present disclosure.
FIG. 5 is a schematic diagram of an encoding scheme provided by an exemplary embodiment of the present disclosure.
FIG. 6 is a schematic diagram of a first type of topology provided by an exemplary embodiment of the present disclosure.
FIG. 7 is a schematic diagram of a second type of topology provided by an exemplary embodiment of the present disclosure.
FIG. 8 is a schematic diagram illustrating system architecture of a communication system provided by an exemplary embodiment of the present disclosure.
FIG. 9 is a flowchart of a transmission method provided by an exemplary embodiment of the present disclosure.
FIG. 10 is a flowchart of a transmission method provided by an exemplary embodiment of the present disclosure.
FIG. 11 is a flowchart of a transmission method provided by an exemplary embodiment of the present disclosure.
FIG. 12 is a flowchart of a transmission method provided by an exemplary embodiment of the present disclosure.
FIG. 13 is a schematic diagram illustrating bands used by a first type of topology provided by an exemplary embodiment of the present disclosure.
FIG. 14 is a schematic diagram illustrating bands used by a second type of topology provided by an exemplary embodiment of the present disclosure.
FIG. 15 is a flowchart of a transmission method provided by an exemplary embodiment of the present disclosure.
FIG. 16 is a schematic diagram illustrating bands used by a first type of topology provided by an exemplary embodiment of the present disclosure.
FIG. 17 is a schematic diagram illustrating bands used by a second type of topology provided by an exemplary embodiment of the present disclosure.
FIG. 18 is a flowchart of a transmission method provided by an exemplary embodiment of the present disclosure.
FIG. 19 is a schematic diagram illustrating bands used by a first type of topology provided by an exemplary embodiment of the present disclosure.
FIG. 20 is a schematic diagram illustrating bands used by a second type of topology provided by an exemplary embodiment of the present disclosure.
FIG. 21 is a flowchart of a transmission method provided by an exemplary embodiment of the present disclosure.
FIG. 22 is a schematic diagram illustrating bands used by a first type of topology provided by an exemplary embodiment of the present disclosure.
FIG. 23 is a schematic diagram illustrating bands used by a second type of topology provided by an exemplary embodiment of the present disclosure.
FIG. 24 is a flowchart of a transmission method provided by an exemplary embodiment of the present disclosure.
FIG. 25 is a schematic diagram illustrating bands used by a first type of topology provided by an exemplary embodiment of the present disclosure.
FIG. 26 is a schematic diagram o illustrating bands used by a second type of topology provided by an exemplary embodiment of the present disclosure.
FIG. 27 is a flowchart of a transmission method provided by an exemplary embodiment of the present disclosure.
FIG. 28 is a schematic diagram illustrating bands used by a first type of topology provided by an exemplary embodiment of the present disclosure.
FIG. 29 is a schematic diagram illustrating bands used by a second type of topology provided by an exemplary embodiment of the present disclosure.
FIG. 30 is a block diagram of a transmission apparatus provided by an exemplary embodiment of the present disclosure.
FIG. 31 is a block diagram of a transmission apparatus provided by an exemplary embodiment of the present disclosure.
FIG. 32 is a block diagram of a transmission apparatus provided by an exemplary embodiment of the present disclosure.
FIG. 33 is a schematic structural diagram of a communication device provided by an exemplary embodiment of the present disclosure.

### DETAILED EMBODIMENTS

To make the objectives, technical solutions, and advantages of the present disclosure clearer, the embodiments of the present disclosure will be further described in detail below with reference to the drawings. Exemplary embodiments will be described in detail herein, examples of which are illustrated in the drawings. When the following description involves the drawings, unless otherwise indicated, the same numbers in different drawings represent the same or similar elements. The implementations described in the following exemplary embodiments do not represent all implementations consistent with the present disclosure. Instead, they are merely examples of apparatuses and methods consistent with some aspects of the present disclosure as detailed in the appended claims.

The terminology used in the present disclosure is only for the purpose of describing certain embodiments and is not intended to limit the present disclosure. The singular forms "a/an," "the," and "said" used in the present disclosure and the appended claims are also intended to include the plural forms, unless the context clearly represents other meaning. It should also be understood that the term "and/or" used herein refers to and encompasses any and all possible combinations of one or more associated listed items.

It should be understood that although the terms "first," "second," "third," etc., may be used in the present disclosure to describe various information, such pieces of information should not be limited to these terms. These terms are only used to distinguish information of the same type from each other. For example, without departing from the scope of the present disclosure, first information may also be referred to as second information, and similarly, the second information may also be referred to as the first information. Depending on the context, the word "if" as used herein may be interpreted as "when" or "upon" or "in response to determining."

The technical solutions described in some embodiments of the present disclosure may be applicable to various communication systems, e.g., a global system for mobile communications (GSM), a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolved system of the NR system, an LTE-based access to unlicensed spectrum (LTE-U) system, an NR-based access to unlicensed spectrum (NR-U) system, a non-terrestrial networks (NTN) system, an universal mobile telecommunication system (UMTS), a wireless local area networks (WLAN) system, a wireless fidelity (WiFi) system, a fifth generation (5G) mobile communication technology system, a cellular IoT system, and a cellular passive IoT system; and may also be applicable to subsequent evolved systems of the 5G NR system; and may also applicable to a sixth generation (6G) mobile communication technology system and its subsequent evolved systems.

It should be understood that in some embodiments of the present disclosure, "5G" may also be referred to as "5G NR" or "NR".

It should be understood that in the description of the embodiments of the present disclosure, the term "correspond/corresponding/correspondence" may mean that there is a direct or indirect correspondence between two elements, may also mean that there is an associated relationship between the two elements, or may also mean a relationship of indicating and being indicated or a relationship of configuring and being configured, etc.

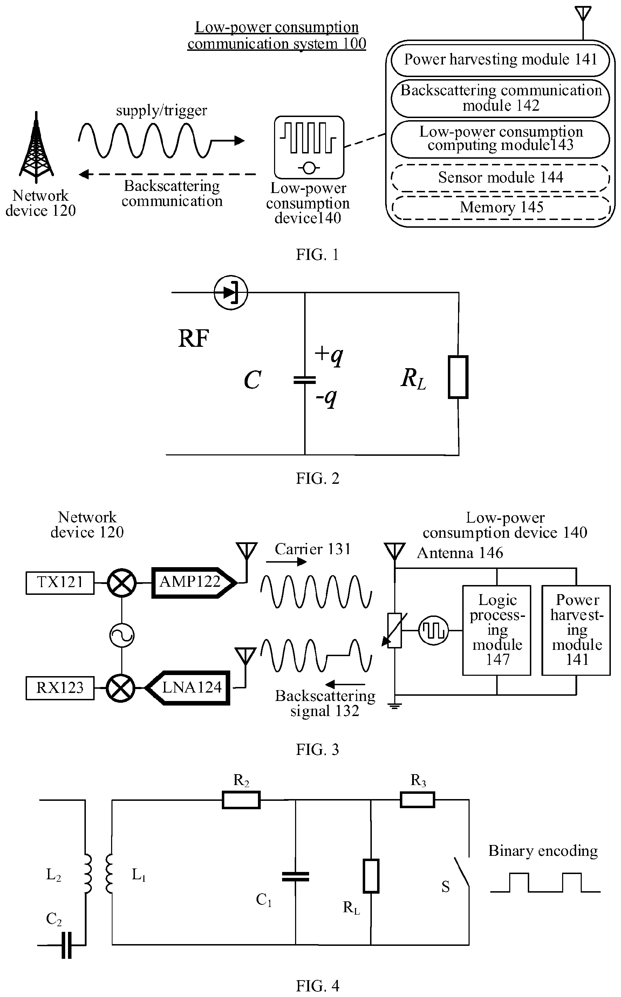

FIG. 1 illustrates a schematic diagram of a low-power consumption communication system 100 provided by an exemplary embodiment of the present disclosure. The low-power consumption communication system 100 includes a network device 120 and a low-power consumption device 140. In some embodiments, the low-power consumption device 140 includes a device (IoT device) that uses various kinds of ambient powers, e.g., wireless radio frequency power, light power, solar power, thermal power, mechanical power and other ambient powers, to drive itself, and has the characteristics of a low-power consumption or zero-power consumption. Such a type of device may have no power storage capability or may have very limited power storage capability (e.g., using a capacitor with a capacitance of tens of uF). In some embodiments, the low-power consumption device 140 includes at least one of a zero-power consumption device, a zero-power consumption IoT device, an ambient IoT device, or a passive IoT device. In some embodiments, low-power consumption communication in the present disclosure is equivalent to or may be replaced with zero-power consumption communication, and the low-power consumption IoT in the present disclosure is equivalent to or may be replaced with zero-power consumption IoT.

The network device 120 is configured to send a wireless power supply signal and a downlink communication signal to the low-power consumption device 140, and to receive a backscattering signal from the low-power consumption device 140. The low-power consumption device 140, which may also be referred to as an ambient power enabled IoT (Ambient IoT) device, includes a power harvesting module 141, a backscattering communication module 142 and a low-power consumption computing module 143. The power harvesting module 141 can harvest power carried in radio waves in space, to drive the low-power consumption computing module 143 of the low-power consumption device 140 and achieve the backscattering communication. After obtaining the power, the low-power consumption device 140 may receive control signalling from the network device 120 and send data to the network device 120 by backscattering according to the control signalling. The sent data may be from data stored in the low-power consumption device 140 itself (for example, identification or pre-written information such as the production date, brand, and manufacturer of the product).

The low-power consumption device 140 may further include a sensor module 144 and a memory 145. The sensor module 144 may include various types of sensors, and the low-power consumption device 140 may report the data collected by the various types of sensors based on the low-power consumption mechanism. The memory 145 is configured to store some basic information (e.g., item identifier) or store the obtained sensor data such as ambient temperature and ambient humidity.

The low-power consumption device 140 itself does not require a battery, and simple operations such as signal demodulation, decoding or encoding, and modulation may be achieved by using the low-power consumption computing module 143. Therefore, the low-power consumption module 140 only requires a very simple hardware design, which enables the low-power consumption device 140 to be very low in cost and small in size.

The network device 120 includes, but is not limited to, a cellular network device (e.g., a 5G or 6G network device, or a base station device), or a WIFI or WLAN network device (e.g., an access point (AP), a router, a mobile access point, etc., where the mobile access point is, for example, a mobile phone.

The low-power consumption device 140 includes, but is not limited to, a handheld device, a wearable device, an in-vehicle device, and an IoT device. The low-power consumption device 140 may be at least one of: a mobile phone, a tablet computer, an e-book reader, a laptop computer, a desktop computer, a television, a game console, an augmented reality (AR) terminal, a virtual reality (VR) terminal, a mixed reality (MR) terminal, a wearable device, a handle, an electronic tag, or a controller.

### Low-power consumption communication is further introduced below.

### • Radio Frequency Power Harvesting

FIG. 2 illustrates a schematic diagram illustrating radio frequency power harvesting provided by an exemplary embodiment of the present disclosure. The radio frequency power harvesting is based on the principle of electromagnetic induction. The radio frequency power harvesting utilizes a radio frequency (RF) module for the electromagnetic induction and is connected to a capacitor C and a load resistor R_{L} that are connected in parallel, to achieve electromagnetic power harvesting in space and obtain the power required to drive the low-power consumption device to operate, e.g., to drive a low-power consumption demodulation module, a modulation module, a sensor, and memory read. Therefore, the low-power consumption device does not require the traditional battery.

### • Backscattering Communication (Back Scattering)

FIG. 3 illustrates a schematic diagram of a backscattering communication process provided by an exemplary embodiment of the present disclosure. The low-power consumption device 140 receives a wireless signal carrier 131 sent by a sending (transmit, TX) module 121 of the network device 120 using an amplifier (AMP) 122, modulates the wireless signal carrier 131, loads, by using a logic processing module 147, information that needs to be sent, and harvests radio frequency power using the power harvesting module 141. The low-power consumption device 140 radiates the modulated reflected signal 132 using an antenna 146, and this information transmission process is referred to as backscattering communication. A receiving (receive, RX) module 123 of the network device 120 receives the modulated reflected signal 132 using a low noise amplifier (LNA) 124. The backscattering and load modulation functions are inseparable. The load modulation adjusts and controls circuit parameters of an oscillation circuit of the low-power consumption device 140 according to the rhythm of the data stream, thereby changing parameters such as a magnitude of the impedance of the electronic tag and completing the modulation process.

The load modulation technology mainly includes resistive load modulation and capacitive load modulation. FIG. 4 illustrates a schematic diagram of the resistive load modulation provided by an exemplary embodiment of the present disclosure. In the resistive load modulation, a load resistor R_{L} is connected in parallel to a third resistor R₃, whose connection or disconnection is achieved by the switch S based on control of the binary encoding. The voltage on the circuit may be changed by the connection or disconnection of the third resistor R₃. The load resistor R_{L} is connected in parallel to a first capacitor C₁ and is connected in series with a second resistor R₂, and the second resistor R₂ is connected in series with a first inductor L₁. The first inductor L₁ is coupled to a second inductor L₂, and the second inductor L₂ is connected in series with a second capacitor C₂. This can achieve amplitude shift keying (ASK) modulation, i.e., achieving signal modulation and transmission by adjusting the amplitude of the backscattering signal of the low-power consumption device. Similarly, in the capacitive load modulation, the resonant frequency of the circuit may be changed by the connection or disconnection of the capacitor, which achieves frequency shift keying (FSK) modulation, i.e., achieving signal modulation and transmission by adjusting the operating frequency of the backscattering signal of the low-power consumption device.

The low-power consumption device performs information modulation on an incoming wave signal by means of load modulation, thereby achieving the backscattering communication process. The low-power consumption device has significant advantages as follows: (1) it does not actively transmit a signal, and thus a complex RF link is not required (e.g., a power amplifier (PA), a RF filter, etc); (2) it does not actively generate a high-frequency signal, and thus a high-frequency crystal oscillator is not required; and (3) the low-power consumption device does not consume its own power by means of the backscattering communication during signal transmission.

### • Ultra-Low-Power Active Transmission Technology

The low-power consumption device may also use the ultra-low-power active transmission technology. Unlike backscattering, when the low-power consumption device performs a data transmission using the ultra-low-power active transmission technology, the low-power consumption device needs to generate an RF carrier using a relatively simple and low-power oscillator and then modulates information to be sent onto the RF carrier. Based on current research, the power consumption of an ultra-low-power active transmitting set may be as low as hundreds of microwatts, and thus ultra-low-power data transmission may be achieved.

### • Encoding Modes of Low-power Consumption Communication

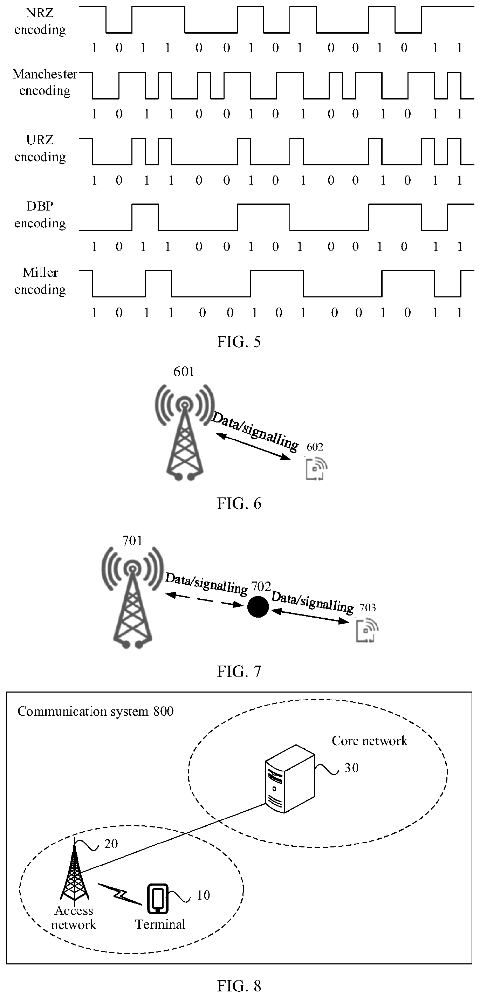

FIG. 5 illustrates a schematic diagram illustrating encoding modes provided by an exemplary embodiment of the present disclosure. For the data transmitted or received by the electronic tag, different forms of codes may be used to represent binary "1" and "0". The RF identification system usually uses one of the following encoding methods: non-return-to-zero (NRZ) encoding, Manchester encoding, unipolar return-to-zero (URZ) encoding, differential binary phase (DBP) encoding, Miller encoding, and differential encoding. That is, different pulse signals may be used to represent 0 and 1.
(1) NRZ encoding: NRZ encoding uses a high level to represent binary "1" and a low level to represent binary "0". NRZ encoding in FIG. 5 illustrates a schematic diagram illustrating levels of binary data 101100101001011 encoded using the NRZ method.
(2) Manchester encoding: Manchester encoding is also referred to as split-phase coding. In Manchester encoding, a binary value is represented by a change in a level (increase/decrease) at half of a bit period within a bit length. A negative jump at the half of the bit period represents binary "1", and a positive jump at the half of the bit period represents binary "0". Data transmission error refers to that when data bits simultaneously sent by multiple electronic tags have different values, a received increasing edge and a received decreasing edge cancel each other out, resulting in an uninterrupted carrier signal throughout the entire bit length. Within the bit length of Manchester encoding, there cannot be a state that remains unchanged. The reader may use this error to determine the exact location where the collision occurs. Manchester encoding is helpful in detecting errors in data transmission and is commonly used for data transmission from electronic tags to readers when using carrier load modulation or backscattering modulation. Manchester encoding in FIG. 5 illustrates a schematic diagram illustrating levels of binary data 101100101001011 encoded using the Manchester method.
(3) URZ encoding: in URZ encoding, a high level in a first half of a bit period represents binary "1", and a low level signal that is present throughout the entire bit period represents binary "1". URZ encoding in FIG. 5 illustrates a schematic diagram illustrating levels of binary data 101100101001011 encoded using the URZ method.
(4) DBP encoding: in DBP encoding, any edge within half of a bit period represents binary "0", and no edge represents binary "1". In addition, the levels are inverted at the beginning of each bit period. For the receiver, a bit clock may be reconstructed more easily. DBP encoding in FIG. 5 illustrates a schematic diagram illustrating levels of binary data 101100101001011 encoded using the DBP method.
(5) Miller encoding: in Miller encoding, any edge within half of a bit period represents binary "1", and a level that is unchanged when experiencing a next bit period represents binary "0". The level transition occurs at the beginning of the bit period. Therefore, for the receiver, a bit clock may be reconstructed more easily. Miller encoding in FIG. 5 illustrates a schematic diagram illustrating levels of binary data 101100101001011 using the Miller method.
(6) Differential encoding: in differential encoding, each binary "1" to be transmitted causes a change in the signal level, while for binary "0", the signal level remains unchanged.

### ·Classification of Low-Power Consumption Device

Based on power sources and usage manners of the low-power consumption device, the low-power consumption device may be classified into the following types.

### (1) Passive Low-Power Consumption Device

The low-power consumption device does not require a built-in battery. When the low-power consumption device approaches a network device, the low-power consumption device is within a near-field range formed by radiation of an antenna of the network device. Exemplarily, the network device is a reader/writer of a radio frequency identification (RFID) system. The antenna of the low-power consumption device generates an induced current through electromagnetic induction, and the induced current drives a low-power consumption chip circuit of the low-power consumption device, to achieve operations of signal demodulation of a forward link (downlink, a link from the network device to the low-power consumption device), signal modulation of a backward link (uplink, a link from the low-power consumption device to the network device), etc. For a backscattering link, the low-power consumption device may perform a transmission for a signal in a backscattering manner or an ultra-low-power active transmission manner.

The passive low-power consumption device does not require the built-in battery to drive either the forward link or the backward link, and is a true sense of low-power consumption (zero-power consumption) device. The passive low-power consumption device does not require the battery, and the RF circuit and the baseband circuit of the passive low-power consumption device are both very simple. For example, the passive low-power consumption device does not require an LNA, a PA, a crystal oscillator, an analog-to-digital converter (ADC), etc. Therefore, the passive low-power consumption device has many advantages such as small size, light weight, very low price, and long service life.

### (2) Semi-Passive Low-Power Consumption Device

The semi-passive low-power consumption device itself is not equipped with a conventional battery, but can use an RF power harvesting module to harvest radio wave power, or use a harvesting module corresponding to power such as solar power, light power, thermal power or kinetic power to harvest power; and simultaneously, the semi-passive low-power consumption device stores the harvested power in an power storage unit, exemplarily, the power storage unit is a capacitor. The power storage unit, after obtaining the power, can drive the low-power consumption chip circuit of the low-power consumption device, to achieve operations of signal demodulation of the forward link, and signal modulation of the backward link, etc. For the backscattering link, the low-power consumption device may perform a transmission for a signal in a backscattering manner or an ultra-low-power active transmission manner.

The semi-passive low-power consumption device does not require the built-in battery to drive either the forward link or the backward link. The power stored in the capacitor is used in operation, and comes from the radio power harvested by the RF power harvesting module. Therefore, the semi-passive low-power consumption device is a true sense of low-power consumption (zero-power consumption) device. The semi-passive low-power consumption device inherits many advantages of the passive low-power consumption device, such as the advantages of small size, light weight, very low price, and long service life.

### (3) Active Low-Power Consumption Device

The low-power consumption device used in some scenarios may also be an active low-power consumption device. This type of low-power consumption device may have a built-in battery (for example, may use a conventional battery, e.g., a dry battery, a rechargeable lithium battery, etc). The battery is used to drive the low-power consumption chip circuit of the low-power consumption device, to achieve operations of signal demodulation of the forward link, and signal modulation of the backward link, etc. However, for the backscattering link, the low-power consumption device may perform a transmission for a signal in a backscattering manner or an ultra-low-power active transmission manner. Therefore, the low-power consumption of the active low-power consumption device is mainly reflected in the fact that the signal transmission of the backward link does not consume the power of the low-power consumption device itself, but uses the backscattering manner. Although the active low-power consumption device uses the battery, the power consumption is very low due to the sampling ultra-low-power consumption communication technology, and therefore, the working life of the battery can be greatly improved. The active low-power consumption device has the built-in battery for supplying power to the RFID chip, so as to increase a read and write distance of a tag, thereby improving the communication reliability. Therefore, the active low-power consumption device may be applied in some scenarios with relatively high requirements for a communication distance, a reading delay, etc.

### ·Classification of Low-Power Consumption Device Based on Types of Transmitting sets

Service types of the low-power consumption IoT are similar to service types of other IoTs, with an uplink service being the focus. The low-power consumption device may be classified into the following types according to the manner for the low-power consumption device to send data.

### (1) Low-Power Consumption Device Based on Backscattering

This type of low-power consumption device performs an uplink data transmission using the above-mentioned backscattering manner. This type of low-power consumption device is not equipped with an active transmitting set for active transmission, but only equipped with a transmitting set for backscattering. Therefore, when this type of low-power consumption device performs sending of uplink data, the network device is required to provide a carrier, and this type of low-power consumption device performs backscattering based on the carrier to achieve the uplink data transmission.

### (2) Low-Power Consumption Device Based on Active Transmitting Set

This type of low-power consumption device performs an uplink data transmission using an active transmitting set with active transmission capability. Therefore, when performing sending of uplink data, this type of low-power consumption device can send uplink data by using its own active transmitting set without requiring the network device to provide a carrier. The active transmitting set suitable for the low-power consumption device may be, for example, an ultra-low-power ASK transmitting set, an ultra-low-power FSK transmitting set, etc. Based on current implementations, in a case where a signal of 100 µW is transmitted, the overall power consumption of this type of transmitting sets may be reduced to 400 µW to 600 µW.

### (3) Low-Power Consumption Device with both Backscattering and Active Transmitting Set

This type of low-power consumption devices can support both backscattering and an active transmitting set. The low-power consumption device may determine, depending on different situations (e.g., different power level conditions, different available ambient energy conditions, etc.) or based on scheduling of the network device, whether to use the backscattering manner or the active transmitting set for active sending.

### ·Application Scenario of Low-Power Consumption Communication

Due to significant advantages such as extremely low cost, low-power consumption, and small size, low-power consumption communication may be widely used in various industries, such as logistics for vertical industries, intelligent warehousing, intelligent agriculture, energy and electricity, and industrial Internet. The low-power consumption communication may also be applied to personal applications such as smart wearable and smart home.

### ·Cellular Passive IoT

The cellular IoT is booming. For example, the 3rd-generation partnership project (3GPP) has standardized IoT technologies such as NarrowBand-Internet of Things (NB-IoT), machine-type communication (MTC), and reduced capability (RedCap). However, IoT communication requirements in various scenarios remain unmet, as described below.

### Harsh Communication Environment

Some certain IoT scenarios may face extreme environments, such as high temperature, extremely low temperature, high humidity, high pressure, high radiation, or high-speed movement. Examples include ultra-high voltage substations, high-speed train track monitoring, environmental monitoring in high-cold areas, industrial production lines, etc. In these scenarios, the existing IoT terminal devices cannot work due to the limitation of working environments of conventional power supplies. In addition, extreme working environments are also detrimental to the maintenance of the IoT terminal devices, e.g., battery replacement.

### Terminal Form Requirements for Extremely Small Size

Sizes of terminals are required to be extremely small in some certain loT communication scenarios, such as food traceability, commodity circulation, and smart wearable, to facilitate use in these scenarios. For example, IoT terminal devices used for commodity management in the circulation process usually take a form of electronic tags, which are embedded in the commodity packaging in a very small form. For another example, lightweight wearable IoT terminal devices may enhance user experience while meeting user needs.

### IoT Communication Requirements for Extremely Low-Cost

Cost of IoT terminal devices is required to be sufficiently low in numerous IoT communication scenarios, thereby enhancing competitiveness thereof relative to other alternative technologies. For example, in logistics or warehousing scenarios, to facilitate the management of the large number of circulating items, an IoT terminal device may be attached to each item, so that the accurate management of the entire logistics process and lifecycle may be completed through the communication between the IoT terminal device and a logistics network. Prices of IoT terminal devices are required to be sufficiently competitive in these scenarios.

Therefore, in order to fulfill these unmet IoT communication requirements, it is also necessary to develop IoT with ultra-low-cost, extremely small size, battery-free or maintenance-free in the cellular IoT, and low-power consumption IoT may exactly meet these requirements.

Low-power consumption IoT may also be referred to as ambient IoT (A-IoT) or passive IoT. Low-power consumption device refer to a device that uses kinds of ambient powers such as RF power, light power, solar power, thermal power, mechanical power to drive the device itself. This type of device may have no power storage capability or may have very limited power storage capability (e.g., using a capacitor with a capacitance of tens of microfarads). Compared to other IoT devices, the A-IoT device has many advantages such as freedom from a conventional battery, maintenance-freeness, small size, low complexity, low cost, and a long service life cycle.

Low-power consumption IoT may be used in at least the following four types of scenarios:
(1) object recognition, such as management of logistics and production line product, and supply chain management;
(2) environmental monitoring, such as monitoring of temperature, humidity and harmful gases in working environments and natural environments;
(3) positioning, such as indoor positioning, intelligent object search, and production line item positioning; and
(4) intelligent control, such as intelligent control of various types of electrical appliances in smart homes (turning air conditioners on/off and adjusting temperature), and intelligent control of various facilities in agricultural greenhouses (automatic irrigation and fertilization).

### Communication of low-power consumption device is introduced.

At present, at least two types of low-power consumption devices (A-IoT devices) exist.
·A low-power consumption device with a peak power consumption of ~1 uW, which has a power storage capability, an initial sampling frequency offset of 10^{X} ppm, and no uplink power amplifier or downlink power amplifier. This low-power consumption device sends an uplink transmission by backscattering an external carrier wave.
·A low-power consumption device with a peak power consumption of less than a few hundred uW, which has a power storage capability, an initial sampling frequency offset of 10^{X} ppm, and may be configured with an uplink power amplifier and/or a downlink power amplifier. This low-power consumption device may generate uplink sending through internal of the low-power consumption device, or send an uplink transmission by backscattering an external carrier wave.

The low-power consumption device mainly involves two topologies (deployment scenarios).

Exemplarily, FIG. 6 is a schematic diagram illustrating a first type of topology provided by an exemplary embodiment of the present disclosure. As illustrated in FIG. 6, Topology 1 may be represented as base station (BS) 601 ↔ low-power consumption device 602, where the base station 601 and the low-power consumption device 602 perform direct bidirectional signaling and/or data communication with each other. A base station 601 that sends information to the low-power consumption device 602 and a base station 601 that receives information sent by the low-power consumption device 602 may be two different base stations 601.

Exemplarily, FIG. 7 is a schematic diagram illustrating a second type of topology provided by an exemplary embodiment of the present disclosure. As illustrated in FIG. 7, Topology 2 may be represented as base station 701 ↔ intermediate node 702 ↔ low-power consumption device 703. The low-power consumption device 703 performs bidirectional communication with the intermediate node 702, and the intermediate node 702 may relay signaling and/or data between the base station 701 and the low-power consumption device 703. In some embodiments, the intermediate node 702 is a terminal under network control, and the intermediate node 702 is located indoors.

Considering compatibility with the existing cellular network, the low-power consumption device may adopt different sending or receiving manners under the two types of deployment scenarios/topologies. For example, in the topology 1, the low-power consumption device may be regarded as a very low-capability terminal. Therefore, when performing direct communication with a BS, the cellular downlink may be used as the downlink (receiving) of the low-power consumption device, and the cellular uplink may be used as the uplink (sending) of the low-power consumption device. Whereas in the topology 2, the low-power consumption device performs direct communication with a terminal that acts as an intermediate node. In this case, the cellular uplink design or cellular downlink design may be used as the uplink of the low-power consumption device, and/or the cellular uplink design may be used as the downlink of the low-power consumption device. In addition, for a transmission from the intermediate node to the low-power consumption device, the design borrows from the cellular uplink design, considering that the intermediate node generally can only operate in the cellular uplink mode.

Some possible cases are as follows.
·The above-mentioned topologies operate in a frequency division duplexing (FDD) band of a licensed frequency range 1 (FR1).
·Data sent from the low-power consumption device shall be at least on an uplink (UL) band.
·The deployed frequency band may be in-band to NR, in guard-band to LTE or in guard-band to NR, or in a standalone band.

Sending manner for the low-power consumption device is as follows.
·The low-power consumption device performs sending by backscattering an external carrier wave, where the carrier wave is provided by another node outside the topology.
·The low-power consumption device performs sending by backscattering an external carrier wave, where the carrier wave is provided by a node inside the topology, e.g., the BS in the topology 1, or the BS or the intermediate node in the topology 2.
·The low-power consumption device does not require an external or internal carrier wave, and the low-power consumption device generates the data to be sent.

Based on the above analysis, it can be seen that the capabilities of existing network device (BS) and terminal (intermediate node) may fail to support the above-mentioned topologies in which the low-power consumption device is involved. Furthermore, the low-power consumption device may be required to support different capabilities to adapt to different topologies. The present disclosure provides device capabilities required for different devices in the communication system (A-IoT system) in which the low-power consumption device is involved, thereby supporting the deployment of different topologies in which the low-power consumption device is involved. The device capability is related to the uplink band or downlink band on which the device operates, and specifically includes the following.
(1) Capability of Low-Power Consumption Device
   ·For the downlink (receiving) of the low-power consumption device, the low-power consumption device supports at least one of the following three receiving capabilities: receiving on a Uu downlink (DL) band, receiving on a Uu uplink (UL) band, or receiving on a newly introduced band (e.g., a guard-band or a standalone band (SA-band)).
   ·For the uplink (sending) of the low-power consumption device, the low-power consumption device supports at least one of the following three sending capabilities: sending on the Uu UL band, sending on the Uu DL band, or sending on the newly introduced band.
   ·For different scenarios, the above-mentioned capabilities may have different combinations.
(2) Capability of Intermediate Node (for the topology 2)
   ·For the downlink of the low-power consumption device, the intermediate node supports at least one of the following two sending capabilities: sending to the low-power consumption device on the Uu UL band, or sending to the low-power consumption device on the newly introduced band.
   ·For the uplink of the low-power consumption device, the intermediate node supports at least one of the following three receiving capabilities: receiving, on the Uu UL band, sending from the low-power consumption device; receiving, on the Uu DL band, sending from the low-power consumption device; or receiving, on the newly introduced band, sending from the low-power consumption device.
   ·In conjunction with different scenarios, the above-mentioned capabilities may have different combinations.
(3) Capability of network device (for the topology 1)
   ·The fundamental capability is sending to the low-power consumption device on the Uu DL band, and receiving, on the Uu UL band, sending from the low-power consumption device.
   ·For the downlink of the low-power consumption device, the network device supports sending to the low-power consumption device on the newly introduced band.
   ·For the uplink of the low-power consumption device, the network device supports receiving, on the newly introduced band, the low-power consumption device.

By providing corresponding capabilities for the low-power consumption device, the intermediate node, and the network device in the communication system in which the low-power consumption device is involved, the communication system in which the low-power consumption device is involved can be deployed in different topologies (deployment scenarios).

FIG. 8 illustrates a schematic diagram illustrating system architecture of a communication system 800 provided by an embodiment of the present disclosure. This system architecture may include a terminal 10, an access network device 20, and a core network device 30.

The terminal 10 may refer to user equipment (UE), an access terminal, a user unit, a user station, a mobile station, a mobile platform, a remote station, a remote terminal, a mobile device, a wireless communication device, a user agent, or a user apparatus. Optionally, the terminal may also be a cellular phone, a cordless phone, a session initiation protocol (SIP) phone, a wireless local loop (WLL) station, a personal digital assistant (PDA), a handheld device or a computing device with a wireless communication function, or other processing devices connected to a wireless modem, an in-vehicle device, a wearable device, a terminal in a 5th generation system (5GS) or a terminal in a future evolution of a public land mobile network (PLMN), which is not limited in the embodiments of the present disclosure. For ease of description, the above-mentioned devices are collectively referred to as terminals. In some embodiments, a communication connection is established between the terminal 10 and the low-power consumption device, thereby enabling transmission of data and/or signaling with the low-power consumption device.

It should be noted that there are typically multiple terminals 10, and one or more terminals 10 may be distributed within a cell managed by each access network device 20. Furthermore, one or more terminals 10 may also be distributed outside the cell managed by the access network device 20. Different terminals 10 may communicate with each other via a sidelink.

The access network device 20 is a device deployed in an access network to provide the wireless communication function for the terminal 10. The access network device 20 may include various forms of macro base stations, micro base stations, relay stations, access points, and so on. In systems employing different radio access technologies, the name of the device with the function of an access network device may vary. For example, in the 5G NR system, it is referred to as a gNodeB or a gNB. With the evolution of the communication technology, the name "access network device" may change. For ease of description, in the embodiments of the present disclosure, the above-mentioned apparatuses that provide the wireless communication function for the terminal 10 are collectively referred to as access network devices. Optionally, a communication relationship may be established between the terminal 10 and the core network device 30 via the access network device 20. Exemplarily, in a long term evolution (LTE) system, the access network device 20 may be an evolved universal terrestrial radio access network (EUTRAN) or one or more eNodeBs in the EUTRAN. In the 5G NR system, the access network device 20 may be a RAN or one or more gNBs in the RAN.

The function of the core network device 30 mainly includes providing user connectivity, managing users, and completing service bearing, acting as a bearer network that provides an interface to an external network. For example, a core network device in the 5G NR system may include devices such as an access and mobility management function (AMF) entity, a user plane function (UPF) entity, and a session management function (SMF) entity. The access network device 20 and the core network device 30 may be collectively referred to as network devices.

In an example, the access network device 20 and the core network device 30 communicate with each other via a certain type of air interface technology, e.g., an NG interface in the 5G NR system. The access network device 20 and the terminal 10 communicate with each other via a certain type of air interface technology, e.g., a Uu interface. A terminal 10 and a terminal 10 communicate with each other via a certain type of air interface technology, e.g., a PC5 interface.

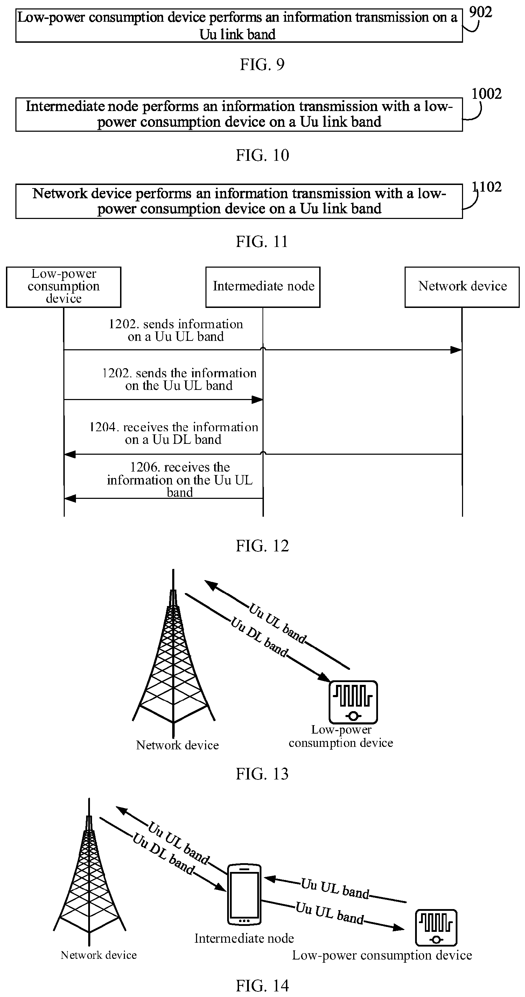

FIG. 9 is a flowchart of a transmission method provided by an exemplary embodiment of the present disclosure. The method may be performed by a low-power consumption device. The method includes the following.

**In operation 902,** the low-power consumption device performs an information transmission on a Uu link band.

In some embodiments, the low-power consumption device includes a device driven by using ambient power, for example, using the ambient power such as radio frequency power, light power, solar power, thermal power, or mechanical power. In some embodiments, the low-power consumption device has no power storage capability or has limited power storage capability. In some embodiments, the low-power consumption device is equivalent to or may be replaced with a zero-power consumption device, a zero-power consumption IoT device, an ambient IoT (A-IoT) device, or a passive IoT device.

The Uu link band refers to band resources used by the Uu link. In some embodiments, the Uu link band is equivalent to or may be replaced with a Uu band. In some embodiments, the Uu link is a communication link established based on a Uu interface. In some embodiments, the Uu link is a communication link established between an access network device (e.g., a base station) and user equipment (e.g., a terminal) via the Uu interface. The Uu link is different from a sidelink of device-to-device (D2D) communication and a sidelink of vehicle-to-X (V2X) communication. In some embodiments, the cellular band used by the 3GPP communication system may be referred to as the Uu band. In some embodiments, depending on a duplex mode on different Uu bands, the Uu band may be classified into a time division duplex (TDD) band and a frequency division duplex (FDD) band. The FDD band adopts two symmetric frequency channels for a Uu uplink (sending by UE) and a Uu downlink (receiving by UE), respectively, and reserves a certain band guard interval between the Uu uplink and the Uu downlink. Furthermore, the band regulations may divide band resources for other radio technologies, e.g., band resources for a satellite, Wi-Fi, and emergency rescue.

In some embodiments, the Uu UL band in the present disclosure includes a band for uplink in the FDD band, and the Uu DL band in the present disclosure includes a band for downlink in the FDD band. In some embodiments, the FDD band belongs to an FR1.

In some embodiments, the low-power consumption device performing the information transmission includes at least one of: sending information or receiving the information. The information transmitted and/or received by the low-power consumption device includes at least one of signaling, data, or a reference signal.

In some embodiments, the low-power consumption device performs the information transmission with an intermediate node on the Uu link band. The intermediate node includes a node between the low-power consumption device and a network device. The intermediate node has established a communication connection with the low-power consumption device and the network device, respectively. In some embodiments, the intermediate node is used to relay the information between the network device and the low-power consumption device. In some embodiments, the intermediate node is a terminal.

In some embodiments, the low-power consumption device performs the information transmission with the network device on the Uu link band. In some embodiments, the network device includes an access network device, e.g., a base station.

In some embodiments, the low-power consumption device sends the information on at least one of the Uu UL band or the Uu DL band (for example, the low-power consumption device 602 performs sending towards the network device 601 as illustrated in FIG. 6, and/or the low-power consumption device 703 performs sending towards the intermediate node 702 as illustrated in FIG. 7), and/or the low-power consumption device receives the information on at least one of the Uu UL band or the Uu DL band (for example, the low-power consumption device 602 receives sending from the network device 601 as illustrated in FIG. 6, and/or the low-power consumption device 703 receives sending from the intermediate node 702 as illustrated in FIG. 7). The Uu UL is a communication link for user equipment to send information to an access network device, and the Uu DL is a communication link for an access network device to send information to user equipment.

In some embodiments, the low-power consumption device sends the information to the intermediate node on at least one of the Uu UL band or the Uu DL band. In some embodiments, the low-power consumption device receives, on at least one of the Uu UL band or the Uu DL band, the information sent by the intermediate node. In some embodiments, the low-power consumption device sends the information to the network device on at least one of the Uu UL band or the Uu DL band. In some embodiments, the low-power consumption device receives, on at least one of the Uu UL band or the Uu DL band, the information sent by the network device. In some embodiments, the low-power consumption device performs the information transmission with the intermediate node and/or the network device on a band other than the Uu link band.

Exemplarily, continuing referring to FIG. 6, in a topology 1, the low-power consumption device 602 may send information to the network device 601 on the Uu UL band, and/or send information to the network device 601 on a band other than the Uu link band. The low-power consumption device 602 may receive, on the Uu DL band, the information sent by the network device 601, and/or receive, on a band other than the Uu link band, the information sent by the network device 601 band.

Exemplarily, continuing referring to FIG. 7, in a topology 2, the low-power consumption device 703 may send the information to the intermediate node 702 on at least one band of bands other than the Uu UL band, the Uu DL band, and the Uu link band. The low-power consumption device 703 may receive, on a band other than the Uu UL band and/or the Uu link band, the information sent by the intermediate node 702. The intermediate node 702 may send the information to the network device 701 on the Uu UL band. The intermediate node 702 may receive, on the Uu DL band, the information sent by the network device 701.

For the information transmission described above, the relevant devices require to have corresponding capabilities. Capabilities of the low-power consumption device, the intermediate node, and the network device are introduced below.

In some embodiments, the low-power consumption device has at least one of a first capability, a third capability, a fifth capability, a sixth capability, an eighth capability, or an eleventh capability. Among them, the first capability, the third capability, and the eighth capability correspond to sending by the low-power consumption device; and the fifth capability, the sixth capability, and the eleventh capability correspond to receiving by the low-power consumption device. In some embodiments, the first capability is used to indicate that the low-power consumption device supports sending the information on the Uu UL band. The third capability is used to indicate that the low-power consumption device supports sending the information on the Uu DL band. The fifth capability is used to indicate that the low-power consumption device supports receiving the information on the Uu DL band. The sixth capability is used to indicate that the low-power consumption device supports receiving the information on the Uu UL band. The eighth capability is used to indicate that the low-power consumption device supports sending the information on a first band. The eleventh capability is used to indicate that the low-power consumption device supports receiving the information on the first band.

In some embodiments, the intermediate device has at least one of a second capability, a fourth capability, a seventh capability, a tenth capability, or a thirteenth capability. Among them, the second capability, the fourth capability, and the tenth capability correspond to receiving by the intermediate node; and the seventh capability and the thirteenth capability correspond to sending by the intermediate node. In some embodiments, the second capability is used to indicate that the intermediate node supports receiving, on the Uu UL band, the information sent by the low-power consumption device. The fourth capability is used to indicate that the intermediate node supports receiving, on the Uu DL band, the information sent by the low-power consumption device. The seventh capability is used to indicate that the intermediate node supports sending the information to the low-power consumption device on the Uu UL band. The tenth capability is used to indicate that the intermediate node supports receiving, on the first band, information sent by the low-power consumption device. The thirteenth capability indicates that the intermediate node supports sending the information to the low-power consumption device on the first band.

In some embodiments, the network device has at least one of a ninth capability or a twelfth capability. The ninth capability corresponds to receiving by the network device, and the twelfth capability corresponds to sending by the network device. For details, please refer to the following introduction. In some embodiments, the ninth capability is used to indicate that the network device supports receiving, on the first band, the information sent by the low-power consumption device. The twelfth capability is used to indicate that the network device supports sending the information to the low-power consumption device on the first band.

### Regarding Capability of the Low-power Consumption Device

In some embodiments, in a case where the low-power consumption device has the first capability, the low-power consumption device sends the information on the Uu UL band. The first capability is used to indicate that the low-power consumption device supports sending the information on the Uu UL band.

In some embodiments, the low-power consumption device sending the information on the Uu UL band includes at least one of: the low-power consumption device sending the information to the network device on the Uu UL band, or the low-power consumption device sending the information to the intermediate node on the Uu UL band. In this case, the intermediate node has the second capability. The second capability is used to indicate that the intermediate node supports receiving, on the Uu UL band, the information sent by the low-power consumption device.

In some embodiments, in a case where the low-power consumption device has the third capability, the low-power consumption device sends the information on the Uu DL band. The third capability is used to indicate that the low-power consumption device supports sending the information on the Uu DL band. In some embodiments, the low-power consumption device sends the information to the intermediate node on the Uu DL band. In this case, the intermediate node has the fourth capability. The fourth capability is used to indicate that the intermediate node supports receiving, on the Uu DL band, the information sent by the low-power consumption device.

In some embodiments, in a case where the low-power consumption device has the fifth capability, the low-power consumption device receives the information on the Uu DL band. The fifth capability is used to indicate that the low-power consumption device supports receiving the information on the Uu DL band. In some embodiments, the low-power consumption device receives, on the Uu DL band, the information sent by the network device.

In some embodiments, in a case where the low-power consumption device has the sixth capability, the low-power consumption device receives the information on the Uu UL band. The sixth capability is used to indicate that the low-power consumption device supports receiving the information on the Uu UL band. In some embodiments, the low-power consumption device receives, on the Uu UL band, the information sent by the intermediate node. In this case, the intermediate node has the seventh capability. The seventh capability is used to indicate that the intermediate node supports sending the information to the low-power consumption device on the Uu UL band.

In some embodiments, in a case where the low-power consumption device has the eighth capability, the low-power consumption device sends the information on the first band. The eighth capability is used to indicate that the low-power consumption device supports sending the information on the first band. In some embodiments, the first band includes at least one of a guard band (guard-band) or a standalone band (SA-band). In some embodiments, the guard band belongs to a cellular band, and the guard band includes a band that serves as a guard interval by reserving a part of bandwidth around (at the edge of) the used band within the cellular band, where the guard band is used to avoid mutual interference between adjacent frequency bands. In some embodiments, the standalone band includes a band that is outside of the cellular band and independent of the cellular band.

In some embodiments, the low-power consumption device sending the information on the first band includes at least one of: the low-power consumption device sending the information to the network device on the first band, or the low-power consumption device sending the information to the intermediate node on the first band. In this case, the network device has the ninth capability, and the intermediate node has the tenth capability. The ninth capability is used to indicate that the network device supports receiving, on the first band, the information sent by the low-power consumption device. The tenth capability is used to indicate that the intermediate node supports receiving, on the first band, the information sent by the low-power consumption device.

In some embodiments, in a case where the low-power consumption device has the eleventh capability, the low-power consumption device receives the information on the first band. The eleventh capability is used to indicate that the low-power consumption device supports receiving the information on the first band.

In some embodiments, the low-power consumption device receiving the information on the first band includes at least one of: the low-power consumption device receiving, on the first band, the information sent by the network device; or the low-power consumption device receiving, on the first band, the information sent by the intermediate node. In this case, the network device has the twelfth capability, and the intermediate node has the thirteenth capability. The twelfth capability is used to indicate that the network device supports sending the information to the low-power consumption device on the first band. The thirteenth capability is used to indicate that the intermediate node supports sending the information to the low-power consumption device on the first band.

In some embodiments, the capability of the low-power consumption device is notified to the intermediate node and/or the network device via higher-layer signaling. The capability of the low-power consumption device is used to indicate a band on which the low-power consumption device performs the information transmission. The capability of the low-power consumption device includes at least one of the first capability, the third capability, the fifth capability, the sixth capability, the eighth capability, or the eleventh capability.

It should be noted that the above-mentioned capability corresponding to sending by the low-power consumption device and capability corresponding to receiving by the low-power consumption device may be freely combined, which is not limited in the embodiments of the present disclosure. Possible cases of the combination are described below.

**Case** 1: the low-power consumption device has at least one of the following two different receiving capabilities, and the low-power consumption device has the first capability, i.e., supporting sending information on the Uu UL band. The following two capabilities are applicable to two different types of topologies, respectively.
(1) Capability 1-1 (the fifth capability): the low-power consumption device supports receiving the information from the network device on the Uu DL band, applicable to the topology 1.
(2) Capability 1-2 (the sixth capability): the low-power consumption device supports receiving, on the Uu UL band, the information sent from the intermediate node, applicable to the topology 2.

The above content is described by implementing the sending capability and the receiving capability of the low-power consumption device as different capabilities. In some embodiments, the first capability is combined with at least one of the fifth capability or the sixth capability to form a capability.

Case 2: the low-power consumption device has at least one of the following two different "receiving and sending" capabilities. The following two capabilities are applicable to two different types of topologies, respectively.
(1) Capability 2-1 (the fifth capability + the first capability): the low-power consumption device supports receiving, on the Uu DL band, the information sent by the network device, and supports sending the information to the network device on the Uu UL, applicable to the topology1.
(2) Capability 2-2 (the sixth capability + the third capability): the low-power consumption device supports receiving, on the Uu UL band, the information sent by the intermediate node, and supports sending the information to the intermediate node on the Uu DL band, applicable to the topology 2.

The above content is described by combining the sending capability and the receiving capability of the low-power consumption device into a capability. In some embodiments, the above-mentioned sending capability and receiving capability are implemented as different capabilities.

Case 3: the low-power consumption device has at least one of the following two different receiving capabilities, and the low-power consumption device has the eighth capability, supporting sending the information on the first band. The following two capabilities are applicable to two different types of topologies, respectively.
(1) Capability 3-1 (the fifth capability): the low-power consumption device supports receiving, on the Uu DL band, the information sent from the network device, applicable to the topology 1.
(2) Capability 3-2 (the sixth capability): the low-power consumption device supports receiving, on the Uu UL band, the information sent from the intermediate node, applicable to the topology 2.

The above content is described by implementing the sending capability and the receiving capability of the low-power consumption device as different capabilities. In some embodiments, the above-mentioned eighth capability is combined with at least one of the fifth capability or the sixth capability to form a capability.

Case 4: the low-power consumption device has the eleventh capability, supporting receiving the information on the first band. The low-power consumption device also has the first capability, supporting sending the information on the Uu UL band. This case may be applicable to two different types of topologies, respectively, and does not need to introduce different capabilities for the low-power consumption device.

In some embodiments, the above-mentioned sending capability and receiving capability of the low-power consumption device are combined into a capability. In some embodiments, the above-mentioned sending capability and receiving capability are implemented as different capabilities.

Case 5: the low-power consumption device has at least one of the following two different sending capabilities, and the low-power consumption device has the eleventh capability, supporting receiving the information on the first band. The following two capabilities are applicable to two types of different topologies, respectively.
(1) Capability 5-1 (the first capability): the low-power consumption device supports sending the information to the network device on the Uu UL band, applicable to the topology 1.
(2) Capability 5-2 (the third capability): the low-power consumption device supports sending the information to the intermediate node on the Uu DL band, applicable to the topology 2.

The above content is described by implementing the sending capability and the receiving capability of the low-power consumption device as different capabilities. In some embodiments, the eleventh capability is combined with at least one of the first capability or the third capability to form a capability.

Case 6: the low-power consumption device has the eleventh capability, supporting receiving the information on the first band. The low-power consumption device also has the eighth capability, supporting sending the information on the first band; and performs uplink sending. This case may be applicable to two different types of topologies, respectively, and does not need to introduce different capabilities for the low-power consumption device.

In some embodiments, the above-mentioned sending capability and receiving capability of the low-power consumption device are combined into a capability. In some embodiments, the above-mentioned sending capability and receiving capability are implemented as different capabilities.

It should be noted that, in some embodiments, the first capability, the third capability, the fifth capability, the sixth capability, the eighth capability, and the eleventh capability of the low-power consumption device are each implemented as a distinct capability from one another. In some embodiments, two or more of the first capability, the third capability, the fifth capability, the sixth capability, the eighth capability, and the eleventh capability of the low-power consumption device are combined and implemented as the same capability. In a case where multiple capabilities of the low-power consumption device are combined and implemented as one capability, the combined capability includes multiple receiving-related capabilities, multiple sending-related capabilities, or both receiving-related and sending-related capabilities of the low-power consumption device. For the above-mentioned 6 cases corresponding to the low-power consumption device, there may be further combinations. For example, if the case 1 and the case 2 are combined, the low-power consumption device has the first capability, the third capability, the fifth capability, and the sixth capability, and these 4 capabilities may be further combined. If the case 1 and the case 4 are combined, the low-power consumption device has the first capability, the fifth capability, the sixth capability, and the eleventh capability, and these 4 capabilities may be further combined.

### Regarding Capability of Intermediate Node

In some embodiments, in a case where the intermediate node has the second capability, the intermediate node receives, on the Uu UL band, information sent by the low-power consumption device. In this case, the low-power consumption device has the first capability. The second capability is used to indicate that the intermediate node supports receiving, on the Uu UL band, the information sent by the low-power consumption device. The first capability is used to indicate that the low-power consumption device supports sending the information on the Uu UL band.

In some embodiments, in a case where the intermediate node has the fourth capability, the intermediate node receives, on the Uu DL band, information sent by the low-power consumption device. In this case, the low-power consumption device has the third capability. The fourth capability is used to indicate that the intermediate node supports receiving, on the Uu DL band, the information sent by the low-power consumption device. The third capability is used to indicate that the low-power consumption device supports sending the information on the Uu DL band.

In some embodiments, in a case where the intermediate node has the seventh capability, the intermediate node sends the information to the low-power consumption device on the Uu UL band. In this case, the low-power consumption device has the sixth capability. The seventh capability is used to indicate that the intermediate node supports sending the information to the low-power consumption device on the Uu UL band. The sixth capability is used to indicate that the low-power consumption device supports receiving the information on the Uu UL band.

In some embodiments, in a case where the intermediate node has the tenth capability, the intermediate node receives, on the first band, information sent by the low-power consumption device. In this case, the low-power consumption device has the eighth capability. The tenth capability is used to indicate that the intermediate node supports receiving, on the first band, the information sent by the low-power consumption device. The eighth capability is used to indicate that the low-power consumption device supports sending the information on the first band.

In some embodiments, in a case where the intermediate node has the thirteenth capability, the intermediate node sends information to the low-power consumption device on a first band. In this case, the low-power consumption device has the eleventh capability. The thirteenth capability is used to indicate that the intermediate node supports sending the information to the low-power consumption device on the first band. The eleventh capability is used to indicate that the low-power consumption device supports receiving the information on the first band.

It should be noted that the above-mentioned capability corresponding to sending by the intermediate node and capability corresponding to receiving by the intermediate node may be freely combined, which is not limited in the embodiments of the present disclosure. Corresponding to the above-introduced case 1 to the case 6 for the low-power consumption device, possible cases of capability combinations for the intermediate node are described below.

Case 1: the intermediate node has the seventh capability, supporting sending the information to the low-power consumption device on the Uu UL band. The intermediate node also has the second capability, supporting receiving, on the Uu UL band, the information sent by the low-power consumption device.

In some embodiments, the above-mentioned sending capability and receiving capability of the intermediate node are combined into a capability. In some embodiments, the above-mentioned sending capability and receiving capability are implemented as different capabilities. In some embodiments, in a case where the intermediate node is implemented as a terminal, the above-mentioned capabilities are capabilities additionally possessed by the terminal acting as an intermediate node, compared to an existing terminal.

Case 2: the intermediate node has the fourth capability, supporting receiving, on the Uu DL band, the information sent by the low-power consumption device. The intermediate node also has the seventh capability, supporting sending the information to the low-power consumption device on the Uu UL band.

In some embodiments, the above-mentioned sending capability and receiving capability of the intermediate node are combined into a capability. In some embodiments, the above-mentioned sending capability and receiving capability are implemented as different capabilities. In some embodiments, in a case where the intermediate node is implemented as a terminal, the above-mentioned capabilities are capabilities additionally possessed by the terminal acting as an intermediate node, compared to an existing terminal.

Case 3: the intermediate node has the seventh capability, supporting sending the information to the low-power consumption device on the Uu UL band. The intermediate node also has the tenth capability, supporting receiving the information, on the first band, sent by the low-power consumption device.

In some embodiments, the above-mentioned sending capability and receiving capability of the intermediate node are combined into a capability. In some embodiments, the above-mentioned sending capability and receiving capability are implemented as different capabilities. In some embodiments, in a case where the intermediate node is implemented as a terminal, the above-mentioned capabilities are capabilities additionally possessed by the terminal acting as an intermediate node, compared to an existing terminal.

Case 4: the intermediate node has the thirteenth capability, supporting sending the information to the low-power consumption device on the first band. The intermediate node also has the second capability, supporting receiving, on the Uu UL band, the information sent by the low-power consumption device.

In some embodiments, the above-mentioned sending capability and receiving capability of the intermediate node are combined into a capability. In some embodiments, the above-mentioned sending capability and receiving capability are implemented as different capabilities. In some embodiments, in a case where the intermediate node is implemented as a terminal, the above-mentioned capabilities are capabilities additionally possessed by the terminal acting as an intermediate node, compared to an existing terminal.

Case 5: the intermediate node has the thirteenth capability, supporting sending the information to the low-power consumption device on the first band. The intermediate node also has the fourth capability, supporting receiving, on the Uu DL band, the information sent by the low-power consumption device.

In some embodiments, the above-mentioned sending capability and receiving capability of the intermediate node are combined into a capability. In some embodiments, the above-mentioned sending capability and receiving capability are implemented as different capabilities. In some embodiments, in a case where the intermediate node is implemented as a terminal, the above-mentioned capabilities are capabilities additionally possessed by the terminal acting as an intermediate node, compared to an existing terminal.

Case 6: the intermediate node has the thirteenth capability, supporting sending the information to the low-power consumption device on the first band. The intermediate node also has the tenth capability, supporting receiving, on the first band, the information sent by the low-power consumption device.

In some embodiments, the above-mentioned sending capability and receiving capability of the intermediate node are combined into a capability. In some embodiments, the above-mentioned sending capability and receiving capability are implemented as different capabilities. In some embodiments, in a case where the intermediate node is implemented as a terminal, the above-mentioned capabilities are capabilities additionally possessed by the terminal acting as an intermediate node, compared to an existing terminal.

It should be noted that, in some embodiments, the second capability, the fourth capability, the seventh capability, the tenth capability, and the thirteenth capability of the intermediate node are each implemented as a distinct capability from one another. In some embodiments, two or more of the second capability, the fourth capability, the seventh capability, the tenth capability, and the thirteenth capability of the intermediate node are combined and implemented as the same capability. In a case where multiple capabilities of the intermediate node are combined and implemented as one capability, the combined capability includes multiple receiving-related capabilities, multiple sending-related capabilities, or both receiving-related and sending-related capabilities of the intermediate node. For the above-mentioned 6 cases corresponding to the intermediate node, there may be further combinations. For example, if the case 1 and the case 2 are combined, the intermediate node has the second capability, the fourth capability, and the seventh capability, and these 3 capabilities may be further combined. If the case 1 and the case 4 are combined, the intermediate node has the second capability, the seventh capability, and the thirteenth capability, and these 3 capabilities may be further combined.

### Regarding Capability of Network Device

In some embodiments, the network device receives, on the Uu UL band, information sent by the low-power consumption device. In this case, the low-power consumption device has the first capability. The first capability is used to indicate that the low-power consumption device supports sending the information on the Uu UL band.

In some embodiments, the network device sends information to the low-power consumption device on the Uu DL band. In this case, the low-power consumption device has the fifth capability. The fifth capability is used to indicate that the low-power consumption device supports receiving the information on the Uu DL band.

In some embodiments, in a case where the network device has the ninth capability, the network device receives, on the first band, the information sent by the low-power consumption device. In this case, the low-power consumption device has the eighth capability. The ninth capability is used to indicate that the network device supports receiving, on the first band, the information sent by the low-power consumption device. The eighth capability is used to indicate that the low-power consumption device supports sending the information on the first band.

In some embodiments, in a case where the network device has the twelfth capability, the network device sends the information to the low-power consumption device on the first band. In this case, the low-power consumption device has the eleventh capability. The first band includes at least one of the guard band or the standalone band. The twelfth capability is used to indicate that the network device supports sending the information to the low-power consumption device on the first band. The eleventh capability is used to indicate that the low-power consumption device supports receiving the information on the first band.

It should be noted that the above-mentioned capability corresponding to sending by the network device and capability corresponding to receiving by the network device may be freely combined, which is not limited in the embodiments of the present disclosure. Corresponding to the above-introduction of the case 1 to the case 6 for the low-power consumption device, possible cases of capability combinations for the network device are described below.

**Case 1:** the network device has the same capability as the existing network device, not having new capabilities.

**Case 2:** the network device has the same capability as the existing network device, not having new capabilities.

**Case 3:** the network device has the ninth capability, supporting receiving, on the first band, the information sent by the low-power consumption device.

In some embodiments, in a case where the network device is implemented as an access network device, the above-mentioned capability is a capability additionally possessed by the access network device, compared to the existing access network device.

**Case 4:** the network device has the twelfth capability, supporting sending the information to the low-power consumption device on the first band.

In some embodiments, in a case where the network device is implemented as an access network device, the above-mentioned capability is a capability additionally possessed by the access network device, compared to the existing access network device.

**Case 5:** the network device has the twelfth capability, supporting sending the information to the low-power consumption device on the first band.

In some embodiments, in a case where the network device is implemented as an access network device, the above-mentioned capability is a capability additionally possessed by the access network device, compared to the existing access network device.

**Case 6:** the network device has the twelfth capability, supporting sending the information to the low-power consumption device on the first band. The network device also has the ninth capability, supporting receiving, on the first band, the information sent by the low-power consumption device.

In some embodiments, the above-mentioned sending capability and receiving capability of the network device are combined into a capability. In some embodiments, the above-mentioned sending capability and receiving capability are implemented as different capabilities. In some embodiments, in a case where the network device is implemented as an access network device, the above-mentioned capabilities are capabilities additionally possessed by the access network device, compared to the existing access network device.

It should be noted that, in some embodiments, the ninth capability and the twelfth capability of the network device are implemented as different capabilities. In some embodiments, the ninth capability and the twelfth capability of the network device are combined and implemented as the same capability. For the above-mentioned 6 cases corresponding to the network device, there may be further combinations. For example, if the case 3 and the case 4 are combined, the network device has the ninth capability and the twelfth capability, and these 2 capabilities may be further combined. If the case 3 and the case 6 are combined, the network device has the ninth capability and the twelfth capability, and these 2 capabilities may be further combined.

In summary, in the method provided in the embodiment, by having the low-power consumption device perform the information transmission on the Uu link band, an implementation in which the low-power consumption device performs the information transmission with the intermediate node and/or the network device is provided. This can clarify the implementation of information transmission between devices in different topologies corresponding to the low-power consumption device, thereby supporting the communication system in which the low-power consumption device is involved to be capable of being deployed in different topologies. In the topology implemented based on the Uu link, since the Uu link is an existing communication link, reusing the Uu link band can allow the topology based on the Uu link band to meet the band regulations, thereby reducing the implementation cost.

In the method provided in the embodiments, by further having the low-power consumption device send the information to the intermediate node and/or the network device on the Uu UL band, send the information to the intermediate node on the Uu DL band, and send the information to the intermediate node and/or the network device on the first band, multiple implementations in which the low-power consumption device suitable for different topologies performs information sending towards the intermediate node and/or the network device are provided. By having the low-power consumption device receive, on the Uu DL band, the information sent by the network device, receive, on the Uu UL band, the information sent by the intermediate node, and receive, on the first band, the information sent by the intermediate node and/or the network device, multiple implementations in which the low-power consumption device suitable for different topologies performs information receiving from the intermediate node and/or network device are provided. In addition, due to the fact that the coverage of the Uu link is relatively wide, the communication coverage for the low-power consumption device can be improved.

FIG. 10 is a flowchart of a transmission method provided by an exemplary embodiment of the present disclosure. The method may be performed by an intermediate node. The method includes the following.

**In operation 1002,** the intermediate node performs an information transmission with a low-power consumption device on a Uu link band.

In some embodiments, the low-power consumption device includes a device driven by using ambient power. In some embodiments, the low-power consumption device has no power storage capability or has limited power storage capability. In some embodiments, the low-power consumption device is equivalent to or may be replaced with a zero-power consumption device, a zero-power consumption IoT device, an A-IoT device, or a passive IoT device.

The Uu link band refers to band resources used by the Uu link. In some embodiments, the Uu link band is equivalent to or may be replaced with a Uu band. In some embodiments, the Uu link is a communication link established based on a Uu interface. In some embodiments, the Uu link is a communication link established between an access network device and user equipment via the Uu interface. The Uu link is different from a sidelink of D2D communication and a sidelink of V2X communication. In some embodiments, the cellular band used by the 3GPP communication system may be referred to as the Uu band. In some embodiments, the Uu band is classified into a TDD band and an FDD band. Furthermore, the band regulations may divide band resources for other radio technologies, e.g., band resources for a satellite, Wi-Fi, and emergency rescue. In some embodiments, the Uu UL band in the present disclosure includes a band used for uplink in the FDD band, and the Uu DL band in the present disclosure includes a band used for downlink in the FDD band. In some embodiments, the FDD band belongs to an FR1.

In some embodiments, performing the information transmission with the low-power consumption device includes at least one of: sending information to the low-power consumption device, or receiving the information sent by the low-power consumption device. The transmitted and/or received information includes at least one of signaling, data, or a reference signal.

In some embodiments, the intermediate node includes a node between the low-power consumption device and the network device. The intermediate node has established a communication connection with the low-power consumption device and the network device, respectively. In some embodiments, the intermediate node is used to relay the information between the network device and the low-power consumption device. In some embodiments, the intermediate node is a terminal.

In some embodiments, the intermediate node sends the information to the low-power consumption device on at least one of the Uu UL band or the Uu DL band, and/or the intermediate node receives, on at least one of the Uu UL band or the Uu DL band, the information sent by the low-power consumption device. In some embodiments, the intermediate node performs the information transmission with the low-power consumption device on a band other than the Uu link band.

In some embodiments, in a where the intermediate node has a second capability, the intermediate node receives, on the Uu UL band, information sent by the low-power consumption device. In this case, the low-power consumption device has a first capability. The second capability is used to indicate that the intermediate node supports receiving, on the Uu UL band, the information sent by the low-power consumption device. The first capability is used to indicate that the low-power consumption device supports sending the information on the Uu UL band.

In some embodiments, in a case where the intermediate node has a fourth capability, the intermediate node receives, on the Uu DL band, information sent by the low-power consumption device. In this case, the low-power consumption device has a third capability. The fourth capability is used to indicate that the intermediate node supports receiving, on the Uu DL band, the information sent by the low-power consumption device. The third capability is used to indicate that the low-power consumption device supports sending the information on the Uu DL band.

In some embodiments, in a case where the intermediate node has a seventh capability, the intermediate node sends information to the low-power consumption device on the Uu UL band. In this case, the low-power consumption device has a sixth capability. The seventh capability is used to indicate that the intermediate node supports sending the information to the low-power consumption device on the Uu UL band. The sixth capability is used to indicate that the low-power consumption device supports receiving the information on the Uu UL band.

In some embodiments, in a case where the intermediate node has a tenth capability, the intermediate node receives, on a first band, information sent by the low-power consumption device. In this case, the low-power consumption device has an eighth capability. The tenth capability is used to indicate that the intermediate node supports receiving, on the first band, the information sent by the low-power consumption device. The eighth capability is used to indicate that the low-power consumption device supports sending the information on the first band. In some embodiments, the first band includes at least one of a guard band (guard-band) or a standalone band (SA-band). In some embodiments, the guard band belongs to a cellular band, and the guard band includes a band that serves as a guard interval by reserving a part of bandwidth around (at the edge of) the used band within the cellular band, where the guard band is used to avoid mutual interference between adjacent frequency bands. In some embodiments, the standalone band includes a band that is outside of the cellular band and independent of the cellular band.

In some embodiments, in a case where the intermediate node has a thirteenth capability, the intermediate node sends information to the low-power consumption device on the first band. In this case, the low-power consumption device has an eleventh capability. The thirteenth capability is used to indicate that the intermediate node supports sending the information to the low-power consumption device on the first band. The eleventh capability is used to indicate that the low-power consumption device supports receiving the information on the first band.

It should be noted that the above-mentioned capability corresponding to sending by the network device and capability corresponding to receiving by the intermediate node may be freely combined, which is not limited in the embodiments of the present disclosure.

In summary, in the method provided in the embodiment, by having the intermediate node perform the information transmission with the low-power consumption device on the Uu link band, an implementation of the information transmission between the low-power consumption device and the intermediate node is provided. This can clarify the implementation of information transmission between devices in different topologies corresponding to the low-power consumption device, thereby supporting the communication system in which the low-power consumption device is involved to be capable of being deployed in different topologies. In the topology implemented based on the Uu link, since the Uu link is an existing communication link, reusing the Uu link band can allow the topology based on the Uu link band to meet the band regulations, thereby reducing the implementation cost.

In the method provided in the embodiment, by further having the low-power consumption device send the information to the intermediate node on the Uu UL band, send the information to the intermediate node on the Uu DL band, and send the information to the intermediate node on the first band, multiple implementations in which the low-power consumption device performs information sending towards the intermediate node are provided. By having the low-power consumption device receive, on the Uu UL band, the information sent by the intermediate node and receive, on the first band, the information sent by the intermediate node, multiple implementations in which the low-power consumption device performs information receiving from the intermediate node are provided. In addition, due to the fact that the coverage of the Uu link is relatively wide, the communication coverage of the low-power consumption device can be improved.

FIG. 11 is a flowchart of a transmission method provided by an exemplary embodiment of the present disclosure. The method may be performed by a network device. The method includes the following.

**In operation 1102,** the network device performs an information transmission with a low-power consumption device on a Uu link band.

In some embodiments, the low-power consumption device includes a device driven by using ambient power. In some embodiments, the low-power consumption device has no power storage capability or has limited power storage capability. In some embodiments, the low-power consumption device is equivalent to or may be replaced with a zero-power consumption device, a zero-power consumption IoT device, an A-IoT device, or a passive IoT device.

The Uu link band refers to band resources used by the Uu link. In some embodiments, the Uu link band is equivalent to or may be replaced with a Uu band. In some embodiments, the Uu link is a communication link established based on a Uu interface. In some embodiments, the Uu link is a communication link established between an access network device and user equipment via the Uu interface. The Uu link is different from a sidelink of D2D communication and a sidelink of V2X communication. In some embodiments, the cellular band used by the 3GPP communication system may be referred to as the Uu band. In some embodiments, the Uu band is classified into a TDD band and an FDD band. Furthermore, the band regulations may divide band resources for other radio technologies, e.g., band resources for a satellite, Wi-Fi, and emergency rescue. In some embodiments, the Uu UL band in the present disclosure includes a band used for uplink in the FDD band, and the Uu DL band in the present disclosure includes a band used for downlink in the FDD band. In some embodiments, the FDD band belongs to an FR1.

In some embodiments, performing the information transmission with the low-power consumption device includes at least one of: sending information to the low-power consumption device, or receiving the information sent by the low-power consumption device. The transmitted and/or received information includes at least one of signaling, data, or a reference signal.

In some embodiments, the network device includes an access network device, e.g., a base station.

In some embodiments, the network device sends the information to the low-power consumption device on at least one of the Uu UL band or the Uu DL band, and/or the network device receives, on at least one of the Uu UL band or the Uu DL band, the information sent by the low-power consumption device. In some embodiments, the network device performs the information transmission with the low-power consumption device on a band other than the Uu link band.

In some embodiments, the network device receives, on the Uu UL band, information sent by the low-power consumption device. In this case, the low-power consumption device has a first capability. The first capability is used to indicate that the low-power consumption device supports sending the information on the Uu UL band.

In some embodiments, the network device sends information to the low-power consumption device on the Uu DL band. In this case, the low-power consumption device has a fifth capability. The fifth capability is used to indicate that the low-power consumption device supports receiving the information on the Uu DL band.

In some embodiments, in a case where the network device has a ninth capability, the network device receives, on a first band, information sent by the low-power consumption device. In this case, the low-power consumption device has an eighth capability. The ninth capability is used to indicate that the network device supports receiving, on the first band, the information sent by the low-power consumption device. The eighth capability is used to indicate that the low-power consumption device supports sending the information on the first band. In some embodiments, the first band includes at least one of a guard band (guard-band) or a standalone band (SA-band). In some embodiments, the guard band belongs to the cellular band, and the guard band includes a band that serves as a guard interval by reserving a part of bandwidth around (at the edge of) the used band within the cellular band, where the guard band is used to avoid mutual interference between adjacent frequency bands. In some embodiments, the standalone band includes a band that is outside of and independent from the cellular band.

In some embodiments, in a case where the network device has a twelfth capability, the network device sends information to the low-power consumption device on the first band. In this case, the low-power consumption device has an eleventh capability. The first band includes at least one of a guard band or a standalone band. The twelfth capability is used to indicate that the network device supports sending the information to the low-power consumption device on the first band. The eleventh capability is used to indicate that the low-power consumption device supports receiving the information on the first band.

It should be noted that the above-mentioned capability corresponding to sending by the network device and capability corresponding to receiving by the network device may be freely combined, which is not limited in the embodiments of the present disclosure.

In summary, in the method provided in the embodiment, by having the network device perform the information transmission with the low-power consumption device on the Uu link band, an implementation of the information transmission between the low-power consumption device and the network device is provided. This can clarify the implementation of information transmission between devices in different topologies corresponding to the low-power consumption device, thereby supporting the communication system in which low-power consumption device is involved to be capable of being deployed in different topologies. In the topology implemented based on the Uu link, since the Uu link is an existing communication link, reusing the Uu link band can allow the topology based on the Uu link band to meet the band regulations, thereby reducing the implementation cost.

In the method provided in the embodiment, by further having the low-power consumption device send the information to the network device on the Uu UL band, and send the information to the network device on the first band, multiple implementations in which the low-power consumption device performs information sending towards the network device are provided. By having the low-power consumption device receive, on the Uu DL band, the information sent by the network device, and receive, on the first band, the information sent by the network device, multiple implementations in which the low-power consumption device performs information receiving from the intermediate node and/or the network device are provided. In addition, due to the fact that the coverage of the Uu link is relatively wide, the communication coverage of the low-power consumption devices can be improved.

In the method provided in the present disclosure, by designing corresponding capabilities for the low-power consumption device, the intermediate node, and the network device in the communication system in which the low-power consumption device is involved, the communication system in which the low-power consumption device is involved is supported to be capable of being deployed in different topologies (deployment scenarios). Before providing a detailed introduction to the capabilities of various devices, the possible operating bands for the uplink (sending) and downlink (receiving) of the low-power consumption device are first analyzed.

The DL for the low-power consumption device, i.e., on which bands the low-power consumption device receives data and/or signaling from other devices (network device or intermediate node), is introduced below.
- Scheme 1a: the Uu DL band is used as the DL band of the low-power consumption device.

The scheme 1a is applicable to the topology 1, where a link sent from a network device to an intermediate node or a low-power consumption device is referred to as a downlink. The scheme 1a is not applicable to the topology 2, as the existing terminal (intermediate node) cannot perform sending on the Uu DL band.
- Scheme 1b: the Uu UL band is used as the DL band of the low-power consumption device.

The scheme 1b is not applicable to the topology 1, as the existing network device cannot perform sending on the Uu UL band. The scheme 1b is applicable to the topology 2, similar to sidelink and D2D, an intermediate node can perform sending to other devices on the Uu UL band.

The UL for the low-power consumption device, i.e., on which bands the low-power consumption device sends data and/or signaling to other devices, is introduced below.
- Scheme 2a: the Uu UL band is used as the UL band of the low-power consumption device.

The scheme 2a is applicable to the topology 1, where a link received by the network device from an intermediate node or a low-power consumption device is referred to as an uplink. The scheme 2a is also applicable to the topology 2, similar to sidelink and D2D, the intermediate node can receive sending from other devices on the Uu UL band.
- Scheme 2b: the Uu DL band is used as the UL band of the low-power consumption device.

The scheme 2b is not applicable to the topology 1, as the existing network device cannot perform receiving on the Uu DL band. The scheme 2b is applicable to the topology 2, and the existing terminal (intermediate node) needs to receive, on the Uu DL band, sending from the network device and the low-power consumption device.

In addition, in a case where the uplink band and/or the downlink band of the low-power consumption device operates in the guard band and/or standalone band, which is not supported by the existing network device and the existing terminal (intermediate node), redesign is required. In this case, a unified approach may be adopted and specifically is as follows.
- Scheme 1c: the guard band and/or standalone band are used as the DL band of the low-power consumption device. For example, the network device in the topology 1 and/or the terminal in the topology 2 are capable of performing sending to the low-power consumption device on the guard band and/or standalone band. In some embodiments, the guard band belongs to the cellular band, and the guard band includes a band that serves as a guard interval by reserving a part of bandwidth around (at the edge of) the used band within the cellular band, where the guard band is used to avoid mutual interference between adjacent frequency bands. In some embodiments, the standalone band includes a band that is outside of and independent from the cellular band.
- Scheme 2c: the guard band and/or standalone band are used as the UL band of the low-power consumption device. For example, the network device in the topology 1 and/or the terminal in the topology 2 are capable of receiving, on the guard band and/or standalone band, sending from the low-power consumption device.

Based on the above analysis, bands that may be used for the uplink and downlink of the low-power consumption device under different topologies are summarized in Table 1.

**Table 1**

| | | Topology 1 | Topology 2 |
|---|---|---|---|
| DL band of low-power consumption device | Scheme 1a: Uu DL band is used as a band for receiving by the low-power consumption device | Applicable | Intermediate node cannot perform sending on the Uu DL band |
| | Scheme 1b: Uu UL band is used as a band for receiving by the low-power consumption device | Network device cannot perform sending on the Uu UL band | Applicable |
| | Scheme 1c: guard band and/or standalone band are used as a band for receiving by the low-power consumption device | Applicable, a new network device capability is required | Applicable, a new intermediate node capability is required |
| UL band of low-power consumption device | Scheme 2a: Uu UL band is used as a band for sending by the low-power consumption device | Applicable | Applicable |
| | Scheme 2b: Uu DL band is used as a band for sending by the low-power consumption device | Network device cannot perform receiving on the Uu DL band | Applicable |
| | Scheme 2c: guard band and/or standalone band are used as a band for sending by the low-power consumption device | Applicable, a new network device capability is required | Applicable, a new intermediate node capability is required |

In conjunction with the above analysis of the potential bands for data and/or signaling transmission by the low-power consumption device, six possible cases are introduced.

In case 1, the receiving by the low-power consumption device uses the scheme 1a (corresponding to topology 1) + the scheme 1b (corresponding to topology 2), and the sending by the low-power consumption device uses the scheme 2a (corresponding to topology 1 and topology 2).

In case 2, the receiving by the low-power consumption device uses the scheme 1a (corresponding to topology 1) + the scheme 1b (corresponding to topology 2), and the sending by the low-power consumption device uses the scheme 2a (corresponding to topology 1) + the scheme 2b (corresponding to topology 2).

In case 3, the receiving by the low-power consumption device uses the scheme 1a (corresponding to topology 1) + the scheme 1b (corresponding to topology 2), and the sending by the low-power consumption device uses the scheme 2c (corresponding to topology 1 and topology 2).

In case 4, the receiving by the low-power consumption device uses the scheme 1c (corresponding to topology 1 and topology 2), and the sending by the low-power consumption device uses the scheme 2a (corresponding to topology 1 and topology 2).

In case 5, the receiving by the low-power consumption device uses the scheme 1c (corresponding to topology 1 and topology 2), and the sending by the low-power consumption device uses the scheme 2a (corresponding to topology 1) + the scheme 2b (corresponding to topology 2).

In case 6, the receiving by the low-power consumption device uses the scheme 1c (corresponding to topology 1 and topology 2), and the sending by the low-power consumption device uses the scheme 2c (corresponding to topology 1 and topology 2).

### Regarding the Case 1

FIG. 12 is a flowchart of a transmission method provided by an exemplary embodiment of the present disclosure. The method may be applied to the system illustrated in FIG. 8. The method includes the following.

**In** operation 1202, a low-power consumption device sends information to an intermediate node and/or a network device on a Uu UL band.

In some embodiments, the low-power consumption device includes a device driven by using ambient power. In some embodiments, the low-power consumption device has no power storage capability or has limited power storage capability. In some embodiments, the low-power consumption device is equivalent to or may be replaced with a zero-power consumption device, a zero-power consumption IoT device, an A-IoT device, or a passive IoT device.

The Uu link band refers to band resources used by the Uu link. In some embodiments, the Uu link band is equivalent to or may be replaced with a Uu band. In some embodiments, the Uu link is a communication link established based on a Uu interface. In some embodiments, the Uu link is a communication link established between an access network device and user equipment via the Uu interface. The Uu link is different from a sidelink of D2D communication and a sidelink of V2X communication. In some embodiments, the cellular band used by the 3GPP communication system may be referred to as the Uu band. In some embodiments, the Uu band is classified into a TDD band and an FDD band. Furthermore, the band regulations may divide band resources for other radio technologies, e.g., band resources for a satellite, Wi-Fi, and emergency rescue. In some embodiments, the Uu UL band in the present disclosure includes a band used for uplink in the FDD band, and the Uu DL band in the present disclosure includes a band used for downlink in the FDD band. In some embodiments, the FDD band belongs to an FR1.

In some embodiments, the information includes at least one of signaling, data, or a reference signal.

In some embodiments, the intermediate node includes a node between the low-power consumption device and the network device. The intermediate node has established a communication connection with the low-power consumption device and the network device, respectively. In some embodiments, the intermediate node is used to relay the information between the network device and the low-power consumption device. In some embodiments, the intermediate node is a terminal.

In some embodiments, the network device includes an access network device, e.g., a base station.

In some embodiments, in a case where the low-power consumption device has a first capability, the low-power consumption device sends the information on the Uu UL band. The first capability is used to indicate that the low-power consumption device supports sending the information on the Uu UL band. In some embodiments, the low-power consumption device sending the information on the Uu UL band includes at least one of: the low-power consumption device sending the information to the network device on the Uu UL band, or the low-power consumption device sending the information to the intermediate node on the Uu UL band. In this case, the intermediate node has a second capability. The second capability is used to indicate that the intermediate node supports receiving, on the Uu UL band, the information sent by the low-power consumption device.

**In** operation 1204, the low-power consumption device receives, on the Uu DL band, the information sent by the network device.

In some embodiments, in a case where the low-power consumption device has a fifth capability, the low-power consumption device receives the information on the Uu DL band. The fifth capability is used to indicate that the low-power consumption device supports receiving the information on the Uu DL band. In some embodiments, the low-power consumption device receives, on the Uu DL band, the information sent by the network device.

**In** operation 1206, the low-power consumption device receives, on the Uu UL band, the information sent by the intermediate node.

In some embodiments, in a case where the low-power consumption device has a sixth capability, the low-power consumption device receives the information on the Uu UL band. The sixth capability is used to indicate that the low-power consumption device supports receiving the information on the Uu UL band. In some embodiments, the low-power consumption device receives, on the Uu UL band, the information sent by the intermediate node, and in this case, the intermediate node has a seventh capability. The seventh capability is used to indicate that the intermediate node supports sending the information to the low-power consumption device on the Uu UL band.

It should be noted that the above content is described by implementing the sending capability and receiving capability of the low-power consumption device as different capabilities. In some embodiments, the first capability is combined with at least one of the fifth capability or the sixth capability to form a capability. For example, FIG. 13 is a schematic diagram illustrating bands used by a first type of topology provided by an exemplary embodiment of the present disclosure. FIG.14 is a schematic diagram illustrating bands used by a second type of topology provided by an exemplary embodiment of the present disclosure. The capability of the relevant device is introduced in general below with reference to the drawings.

In some embodiments, the capability (the first capability) for the low-power consumption device to send information on the Uu UL band is a default capability of the low-power consumption device. On this basis, the capability of the low-power consumption device may be classified as follows.
- A capability 1 (the fifth capability): receiving, on the Uu DL band, the information sent by the network device.
- A capability 2 (the sixth capability): receiving, on the Uu UL band, the information sent by the intermediate node.

In some embodiments, the first capability is combined with the fifth capability and the sixth capability, respectively, that is, it is classified into two capabilities.
- A capability 1 (the first capability + the fifth capability): receiving, on the Uu DL band, the information sent by the network device, and sending the information to the network device on the Uu UL band.
- A capability 2 (the first capability + the sixth capability): receiving, on the Uu UL band, the information sent by the intermediate node, and sending the information to the intermediate node on the Uu UL band.

For the intermediate node, unlike the existing terminal that only needs to communicate with the network device, a terminal acting as the intermediate node also needs to have the capability (the seventh capability) to send information to the low-power consumption device on the Uu UL band, and/or the capability (the second capability) to receive, on the Uu UL band, the information sent by the low-power consumption device.

In some embodiments, the capability of the low-power consumption device is notified to the intermediate node and/or the network device via higher-layer signaling. The capability of the low-power consumption device is used to indicate a band on which the low-power consumption device performs the information transmission.

In the embodiment, the operation 1202, operation 1204, and operation 1206 are optional. In different embodiments, one or more of these operations may be omitted or replaced.

The operation 1202 may be implemented as an independent embodiment, for example, implemented independently as a sending method on the low-power consumption device side, a receiving method on the intermediate node side, or a receiving method on the network device side. The operation 1204 may be implemented as an independent embodiment, for example, implemented independently as a receiving method on the low-power consumption device side or a sending method on the network device side. The operation 1206 may be implemented as an independent embodiment, for example, implemented independently as a receiving method on the low-power consumption device side or a sending method on the intermediate node side. The operations 1202 and 1204 may be implemented as an independent embodiment, for example, implemented independently as a transmission method on the low-power consumption device side and the network device side. The operations 1202 and 1206 may be implemented as an independent embodiment, for example, implemented independently as a transmission method on the low-power consumption device side and the intermediate node side.

It should be noted that the order of the operations in the embodiment is for illustrative purposes only and does not impose a limitation on the sequence of operations when implementing the embodiment. When implementing the embodiment, the sequence of the operations may be adjusted according to the actual situation.

In summary, in the method provided in the embodiment, by having the low-power consumption device send the information to the intermediate node and/or the network device on the Uu UL band, an implementation in which the low-power consumption device performs information sending towards the intermediate node and/or the network device is provided. By having the low-power consumption device receive, on the Uu DL band, the information sent by the network device, and receive, on the Uu UL band, the information sent by the intermediate node, an implementation in which the low-power consumption device performs information receiving from the intermediate node and/or the network device is provided. This can clarify the implementation of information transmission between devices in different topologies corresponding to the low-power consumption device, thereby supporting the communication system in which the low-power consumption device is involved to be capable of being deployed in different topologies. In the topology implemented based on the Uu link, since the Uu link is an existing communication link, reusing the Uu link band can allow the topology based on the Uu link band to meet the band regulations, thereby reducing the implementation cost.

### Regarding the Case 2

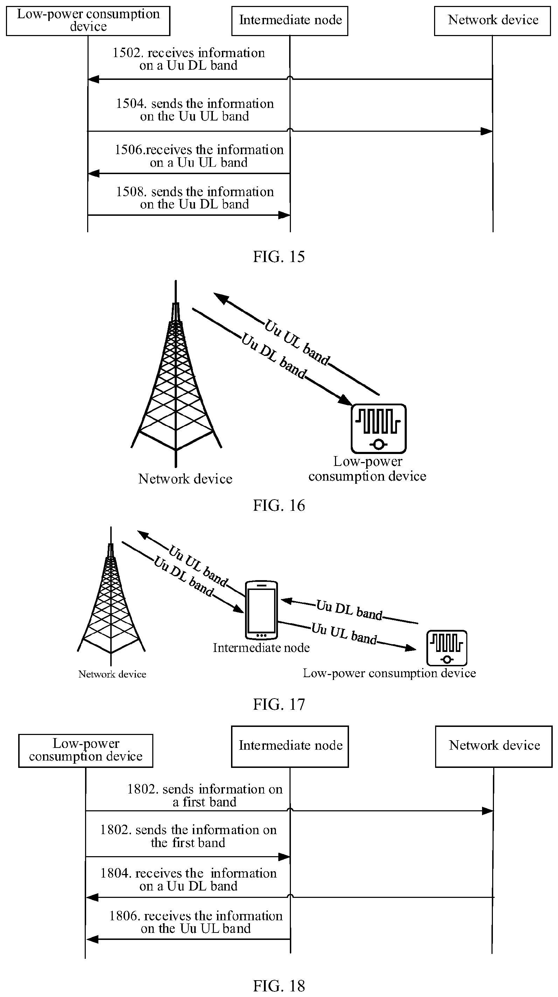

FIG. 15 is a flowchart of a transmission method provided by an exemplary embodiment of the present disclosure. The method may be applied to the system illustrated in FIG. 8. The method includes the following.

**In operation 1502,** a low-power consumption device receives, on a Uu DL band, information sent by a network device.

In some embodiments, the low-power consumption device includes a device driven by using ambient power. In some embodiments, the low-power consumption device has no power storage capability or has limited power storage capability. In some embodiments, the low-power consumption device is equivalent to or may be replaced with a zero-power consumption device, a zero-power consumption IoT device, an A-IoT device, or a passive IoT device.

The Uu link band refers to band resources used by the Uu link. In some embodiments, the Uu link band is equivalent to or may be replaced with a Uu band. In some embodiments, the Uu link is a communication link established based on a Uu interface. In some embodiments, the Uu link is a communication link established between an access network device and user equipment via the Uu interface. The Uu link is different from a sidelink of D2D communication and a sidelink of V2X communication. In some embodiments, the cellular band used by the 3GPP communication system may be referred to as the Uu band. In some embodiments, the Uu band is classified into a TDD band and an FDD band. Furthermore, the band regulations may divide band resources for other radio technologies, e.g., band resources for a satellite, Wi-Fi, and emergency rescue. In some embodiments, the Uu UL band in the present disclosure includes a band used for uplink in the FDD band, and the Uu DL band in the present disclosure includes a band used for downlink in the FDD band. In some embodiments, the FDD band belongs to an FR1.

In some embodiments, the information includes at least one of signaling, data, or a reference signal.

In some embodiments, the network device includes an access network device, e.g., a base station.

In some embodiments, in a case where the low-power consumption device has a fifth capability, the low-power consumption device receives the information on the Uu DL band. The fifth capability is used to indicate that the low-power consumption device supports receiving the information on the Uu DL band. In some embodiments, the low-power consumption device receives, on the Uu DL band, the information sent by the network device.

**In operation 1504,** the low-power consumption device sends the information to the network device on the Uu UL.

In some embodiments, in a case where the low-power consumption device has a first capability, the low-power consumption device sends the information on the Uu UL band. The first capability is used to indicate that the low-power consumption device supports sending the information on the Uu UL band. In some embodiments, the low-power consumption device sends the information to the network device on the Uu UL band.

**In operation 1506,** the low-power consumption device receives, on the Uu UL band, the information sent by the intermediate node.

In some embodiments, the intermediate node includes a node between the low-power consumption device and the network device. The intermediate node has established a communication connection with the low-power consumption device and the network device, respectively. In some embodiments, the intermediate node is used to relay the information between the network device and the low-power consumption device. In some embodiments, the intermediate node is a terminal.

In some embodiments, in a case where the low-power consumption device has a sixth capability, the low-power consumption device receives the information on the Uu UL band. The sixth capability is used to indicate that the low-power consumption device supports receiving the information on the Uu UL band. In some embodiments, the low-power consumption device receives, on the Uu UL band, the information sent by the intermediate node, and in this case, the intermediate node has a seventh capability. The seventh capability is used to indicate that the intermediate node supports sending the information to the low-power consumption device on the Uu UL band.

**In operation 1508,** the low-power consumption device sends information to the intermediate node on the Uu DL band.

In some embodiments, in a case where the low-power consumption device has a third capability, the low-power consumption device sends the information on the Uu DL band. The third capability is used to indicate that the low-power consumption device supports sending the information on the Uu DL band. In some embodiments, the low-power consumption device sends the information to the intermediate node on the Uu DL band. In this case, the intermediate node has a fourth capability. The fourth capability is used to indicate that the intermediate node supports receiving, on the Uu DL band, the information sent by the low-power consumption device.

It should be noted that the above content is described by implementing the sending capability and receiving capability of the low-power consumption device as different capabilities. In some embodiments, at least one of the fifth capability or the sixth capability is combined with at least one of the first capability or the third capability to form a capability. For example, FIG. 16 is a schematic diagram illustrating bands used by a first type of topology provided by an exemplary embodiment of the present disclosure. FIG. 17 is a schematic diagram illustrating bands used by a second type of topology provided by an exemplary embodiment of the present disclosure. The capability of the relevant device is introduced in general below with reference to the drawings.

In some embodiments, the low-power consumption device has two different capabilities for downlink receiving and uplink sending.
- A capability 1 (the fifth capability + the first capability): receiving, on the Uu DL band, the information sent by the network device, and sending the information to the network device on the Uu UL band.
- A capability 2 (the sixth capability + the third capability): receiving, on the Uu UL band, the information sent by the intermediate node, and sending the information to the intermediate node on the Uu DL band.

For the intermediate node, unlike the existing terminal that only needs to communicate with the network device, a terminal acting as the intermediate node also needs to have the capability (the seventh capability) to send the information to the low-power consumption device on the Uu UL band, and/or the capability (the fourth capability) to receive, on the Uu DL band, the information sent by the low-power consumption device.

In some embodiments, the capability of the low-power consumption device is notified to the intermediate node and/or the network device via higher-layer signaling. The capability of the low-power consumption device is used to indicate a band on which the low-power consumption device performs the information transmission.

In the embodiment, the operation 1502, operation 1504, operation 1506, and operation 1508 are optional. In different embodiments, one or more of these operations may be omitted or replaced.

The operation 1502 may be implemented as an independent embodiment, for example, implemented independently as a receiving method on the low-power consumption device side or a sending method on the network device side. The operation 1504 may be implemented as an independent embodiment, for example, implemented independently as a sending method on the low-power consumption device side or a receiving method on the network device side. The operation 1506 may be implemented as an independent embodiment, for example, implemented independently as a receiving method on the low-power consumption device side or a sending method on the intermediate node side. The operation 1508 may be implemented as an independent embodiment, for example, implemented independently as a sending method on the low-power consumption device side or a receiving method on the intermediate node side. The operations 1502 and 1504 may be implemented as an independent embodiment, for example, implemented independently as a transmission method on the low-power consumption device side and the network device side. The operations 1506 and 1508 may be implemented as an independent embodiment, for example, implemented independently as a transmission method on the low-power consumption device side and the intermediate node side.

It should be noted that the order of the operations in the embodiment is for illustrative purposes only and does not impose a limitation on the sequence of operations when implementing the embodiment. When implementing the embodiment, the sequence of the operations may be adjusted according to the actual situation.

In summary, in the method provided in the embodiment, by having the low-power consumption device send the information to the network device on the Uu UL band, and send the information to intermediate node on the Uu DL band, an implementation in which the low-power consumption device performs information sending towards the intermediate node and/or the network device is provided. By having the low-power consumption device receive, on the Uu DL band, the information sent by the network device, and receive, on the Uu UL band, the information sent by the intermediate node, an implementation in which the low-power consumption device performs information receiving from the intermediate node and/or the network device is provided. This can clarify the implementation of information transmission between devices in different topologies corresponding to the low-power consumption device, thereby supporting the communication system in which the low-power consumption device is involved to be capable of being deployed in different topologies. In the topology implemented based on the Uu link, since the Uu link is an existing communication link, reusing the Uu link band can allow the topology based on the Uu link band to meet the band regulations, thereby reducing the implementation cost.

### Regarding the Case 3

FIG. 18 is a flowchart of a sending method provided by an exemplary embodiment of the present disclosure. The method may be applied to the system illustrated in FIG. 8. The method includes the following.

**In** operation 1802, a low-power consumption device sends information to an intermediate node and/or a network device on a first band.

In some embodiments, the low-power consumption device includes a device driven by using ambient power. In some embodiments, the low-power consumption device has no power storage capability or has limited power storage capability. In some embodiments, the low-power consumption device is equivalent to or may be replaced with a zero-power consumption device, a zero-power consumption IoT device, an A-IoT device, or a passive IoT device.

The Uu link band refers to band resources used by the Uu link. In some embodiments, the Uu link band is equivalent to or may be replaced with a Uu band. In some embodiments, the Uu link is a communication link established based on a Uu interface. In some embodiments, the Uu link is a communication link established between an access network device and user equipment via the Uu interface. The Uu link is different from a sidelink of D2D communication and a sidelink of V2X communication. In some embodiments, the cellular band used by the 3GPP communication system may be referred to as the Uu band. In some embodiments, the Uu band is classified into a TDD band and an FDD band. Furthermore, the band regulations may divide band resources for other radio technologies, e.g., band resources for a satellite, Wi-Fi, and emergency rescue. In some embodiments, the Uu UL band in the present disclosure includes a band used for uplink in the FDD band, and the Uu DL band in the present disclosure includes a band used for downlink in the FDD band. In some embodiments, the FDD band belongs to an FR1.

In some embodiments, the information includes at least one of signaling, data, or a reference signal.

In some embodiments, the intermediate node includes a node between the low-power consumption device and the network device. The intermediate node has established a communication connection with the low-power consumption device and the network device, respectively. In some embodiments, the intermediate node is used to relay the information between the network device and the low-power consumption device. In some embodiments, the intermediate node is a terminal.

In some embodiments, the network device includes an access network device, e.g., a base station.

In some embodiments, in a case where the low-power consumption device has an eighth capability, the low-power consumption device sends the information on the first band. The eighth capability is used to indicate that the low-power consumption device supports sending the information on the first band. In some embodiments, the first band includes at least one of a guard band or an SA band. In some embodiments, the guard band belongs to the cellular band, and the guard band includes a band that serves as a guard interval by reserving a part of bandwidth around (at the edge of) the used band within the cellular band, where the guard band is used to avoid mutual interference between adjacent frequency bands. In some embodiments, the SA band includes a band that is outside of and independent from the cellular band.

In some embodiments, the low-power consumption device sending the information on the first band includes at least one of: the low-power consumption device sending the information to the network device on the first band, or the low-power consumption device sending the information to the intermediate node on the first band. In this case, the network device has a ninth capability, and the intermediate node has a tenth capability. The ninth capability is used to indicate that the network device supports receiving, on the first band, the information sent by the low-power consumption device. The tenth capability is used to indicate that the intermediate node supports receiving, on the first band, the information sent by the low-power consumption device.

**In operation 1804,** the low-power consumption device receives, on the Uu DL band, the information sent by the network device.

In some embodiments, in a case where the low-power consumption device has a fifth capability, the low-power consumption device receives the information on the Uu DL band. The fifth capability is used to indicate that the low-power consumption device supports receiving the information on the Uu DL band. In some embodiments, the low-power consumption device receives, on the Uu DL band, the information sent by the network device.

**In operation 1806,** the low-power consumption device receives, on the Uu UL band, the information sent by the intermediate node.

In some embodiments, in a case where the low-power consumption device has a sixth capability, the low-power consumption device receives the information on the Uu UL band. The sixth capability is used to indicate that the low-power consumption device supports receiving the information on the Uu UL band. In some embodiments, the low-power consumption device receives, on the Uu UL band, the information sent by the intermediate node, and in this case, the intermediate node has a seventh capability. The seventh capability is used to indicate that the intermediate node supports sending the information to the low-power consumption device on the Uu UL band.

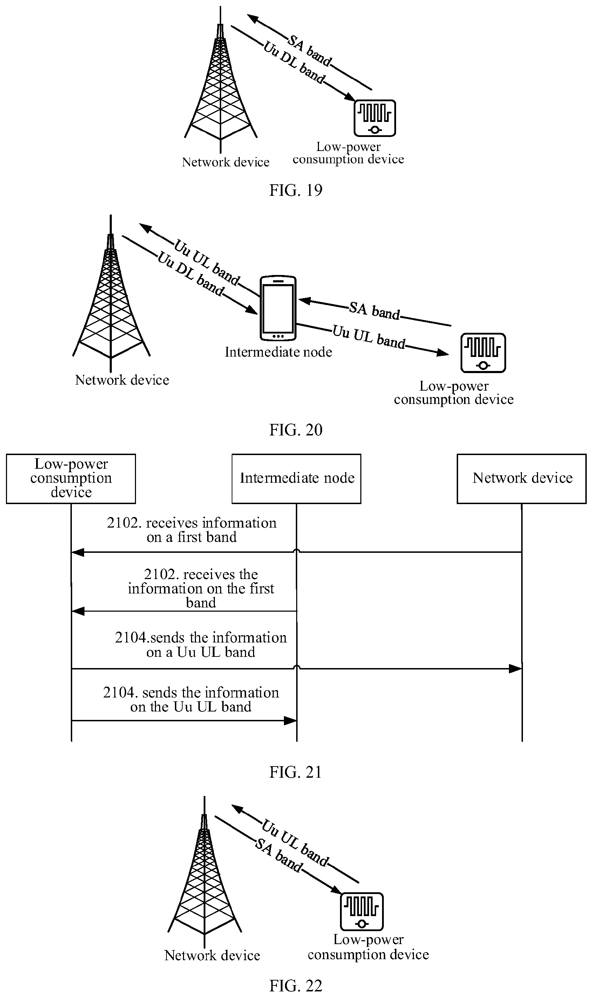

It should be noted that the above content is described by implementing the sending capability and receiving capability of the low-power consumption device as different capabilities. In some embodiments, the eighth capability is combined with at least one of the fifth capability or the sixth capability to form a capability. For example, FIG. 19 is a schematic diagram illustrating bands used by a first type of topology provided by an exemplary embodiment of the present disclosure. FIG. 20 is a schematic diagram illustrating bands used by a second type of topology provided by an exemplary embodiment of the present disclosure. The capability of the relevant device is introduced in general below with reference to the drawings.

In some embodiments, the capability (the eighth capability) for the low-power consumption device to send information on the first band is a default capability of the low-power consumption device. On this basis, the capability of the low-power consumption device may be classified as follows.
- A capability 1 (the fifth capability): receiving, on the Uu DL band, the information sent by the network device.
- A capability 2 (the sixth capability): receiving, on the Uu UL band, the information sent by the intermediate node.

In some embodiments, the eighth capability is combined with the fifth capability and the sixth capability, respectively, that is, it is classified into two capabilities.
- A capability 1 (the eighth capability + the fifth capability): receiving, on the Uu DL band, the information sent by the network device, and sending the information to the network device on the first band.
- A capability 2 (the eighth capability + the sixth capability): receiving, on the Uu UL band, the information sent by the intermediate node, and sending the information to the intermediate node on the first band.

For the intermediate node, unlike the existing terminal that only needs to communicate with the network device, a terminal acting as the intermediate node also needs to have the capability (the seventh capability) to send the information to the low-power consumption device on the Uu UL band, and/or the capability (the tenth capability) to receive, on the first band, the information sent by the low-power consumption device.

For the network device, unlike the existing access network terminal, the network device also needs to support the capability (the ninth capability) to receive, on the first band, the information sent by the low-power consumption device.

In some embodiments, the capability of the low-power consumption device is notified to the intermediate node and/or the network device via higher-layer signaling. The capability of the low-power consumption device is used to indicate a band on which the low-power consumption device performs the information transmission.

In the embodiment, the operation 1802, operation 1804, and operation 1806 are optional. In different embodiments, one or more of these operations may be omitted or replaced.

The operation 1802 may be implemented as an independent embodiment, for example, implemented independently as a sending method on the low-power consumption device side, a receiving method on the intermediate node side, or a receiving method on the network device side. The operation 1804 may be implemented as an independent embodiment, for example, implemented independently as a receiving method on the low-power consumption device side or a sending method on the network device side. The operation 1806 may be implemented as an independent embodiment, for example, implemented independently as a receiving method on the low-power consumption device side or a sending method on the intermediate node side. The operations 1802 and 1804 may be implemented as an independent embodiment, for example, implemented independently as a transmission method on the low-power consumption device side and the network device side. The operations 1802 and 1806 may be implemented as an independent embodiment, for example, implemented independently as a transmission method on the low-power consumption device side and the intermediate node side.

It should be noted that the order of the operations in the embodiment is for illustrative purposes only and does not impose a limitation on the sequence of operations when implementing the embodiment. When implementing the embodiment, the sequence of the operations may be adjusted according to the actual situation.

In summary, in the method provided in the embodiment, by having the low-power consumption device send the information to the intermediate node and/or the network device on the first band, an implementation in which the low-power consumption device performs information sending towards the intermediate node and/or the network device is provided. By having the low-power consumption device receive, on the Uu DL band, the information sent by the network device, and receive, on the Uu UL band, the information sent by the intermediate node, an implementation in which the low-power consumption device performs information receiving from the intermediate node and/or the network device is provided. This can clarify the implementation of information transmission between devices in different topologies corresponding to the low-power consumption device, thereby supporting the communication system in which the low-power consumption device is involved to be capable of being deployed in different topologies. In the topology implemented based on the Uu link, since the Uu link is an existing communication link, reusing the Uu link band can allow the topology based on the Uu link band to meet the band regulations, thereby reducing the implementation cost.

### Regarding the Case 4

FIG. 21 is a flowchart of a transmission method provided by an exemplary embodiment of the present disclosure. The method may be applied to the system illustrated in FIG. 8. The method includes the following.

**In** operation 2102, a low-power consumption device receives, on a first band, information sent by an intermediate node and/or a network device.

In some embodiments, the low-power consumption device includes a device driven by using ambient power. In some embodiments, the low-power consumption device has no power storage capability or has limited power storage capability. In some embodiments, the low-power consumption device is equivalent to or may be replaced with a zero-power consumption device, a zero-power consumption IoT device, an A-IoT device, or a passive IoT device.

The Uu link band refers to band resources used by the Uu link. In some embodiments, the Uu link band is equivalent to or may be replaced with a Uu band. In some embodiments, the Uu link is a communication link established based on a Uu interface. In some embodiments, the Uu link is a communication link established between an access network device and user equipment via the Uu interface. The Uu link is different from a sidelink of D2D communication and a sidelink of V2X communication. In some embodiments, the cellular band used by the 3GPP communication system may be referred to as the Uu band. In some embodiments, the Uu band is classified into a TDD band and an FDD band. Furthermore, the band regulations may divide band resources for other radio technologies, e.g., band resources for a satellite, Wi-Fi, and emergency rescue. In some embodiments, the Uu UL band in the present disclosure includes a band used for uplink in the FDD band. In some embodiments, the FDD band belongs to an FR1.

In some embodiments, the information includes at least one of signaling, data, or a reference signal.

In some embodiments, the intermediate node includes a node between the low-power consumption device and the network device. The intermediate node has established a communication connection with the low-power consumption device and the network device, respectively. In some embodiments, the intermediate node is used to relay the information between the network device and the low-power consumption device. In some embodiments, the intermediate node is a terminal.

In some embodiments, the network device includes an access network device, e.g., a base station.

In some embodiments, in a case where the low-power consumption device has an eleventh capability, the low-power consumption device receives the information on the first band. The eleventh capability is used to indicate that the low-power consumption device supports receiving the information on the first band. In some embodiments, the first band includes at least one of a guard band or an SA band. In some embodiments, the guard band belongs to the cellular band, and the guard band includes a band that serves as a guard interval by reserving a part of bandwidth around (at the edge of) the used band within the cellular band, where the guard band is used to avoid mutual interference between adjacent frequency bands. In some embodiments, the SA band includes a band that is outside of and independent from the cellular band.

In some embodiments, the low-power consumption device receiving the information on the first band includes at least one of: the low-power consumption device receiving, on the first band, the information sent by the network device, or the low-power consumption device receiving, on the first band, the information sent by the intermediate node. In this case, the network device has a twelfth capability, and the intermediate node has a thirteenth capability. The twelfth capability is used to indicate that the network device supports sending the information to the low-power consumption device on the first band. The thirteenth capability is used to indicate that the intermediate node supports sending the information to the low-power consumption device on the first band.

**In operation 2104,** the low-power consumption device sends the information to the intermediate node and/or the network device on the Uu UL band.

In some embodiments, in a case where the low-power consumption device has a first capability, the low-power consumption device sends the information on the Uu UL band. The first capability is used to indicate that the low-power consumption device supports sending the information on the Uu UL band.

In some embodiments, the low-power consumption device sending the information on the Uu UL band includes at least one of: the low-power consumption device sending the information to the network device on the Uu UL band, or the low-power consumption device sending the information to the intermediate node on the Uu UL band. In this case, the intermediate node has a second capability. The second capability is used to indicate that the intermediate node supports receiving, on the Uu UL band, the information sent by the low-power consumption device.

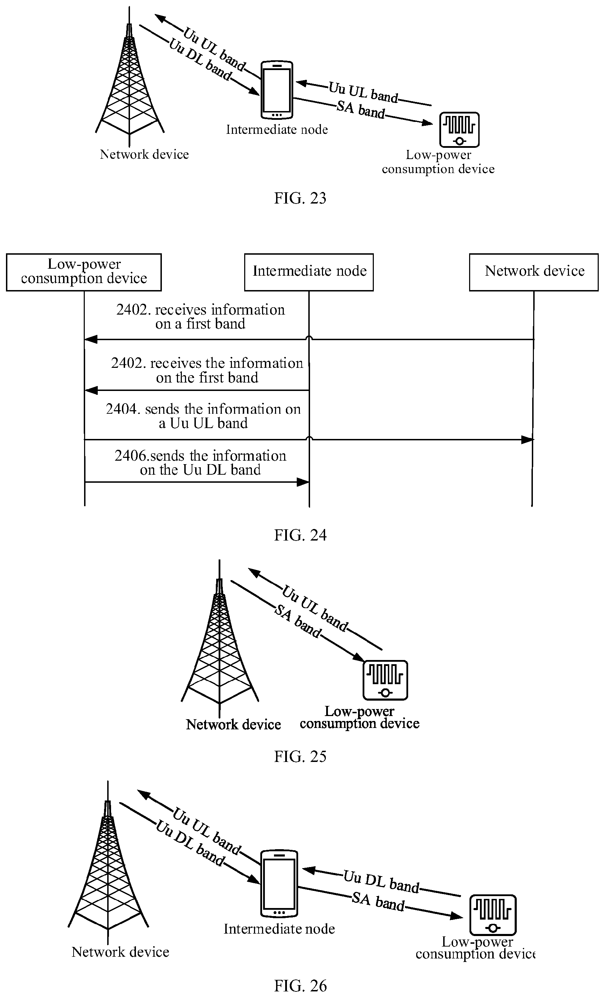

It should be noted that the above content is described by implementing the sending capability and receiving capability of the low-power consumption device as different capabilities. In some embodiments, the eleventh capability is combined with the first capability to form a capability. The capability of the relevant device is introduced in general below. For example, FIG. 22 is a schematic diagram illustrating bands used by a first type of topology provided by an exemplary embodiment of the present disclosure. FIG. 23 is a schematic diagram illustrating bands used by a second type of topology provided by an exemplary embodiment of the present disclosure. The capability of the relevant device is introduced in general below with reference to the drawings.

In some embodiments, for the low-power consumption device, regardless of the type of topology in which it locates, the low-power consumption device has the eleventh capability to support receiving, on the first band, the information sent by the network device and/or the intermediate node; and the low-power consumption device has the first capability to support sending the information to the network device and/or the intermediate node on the Uu UL band. In this case, it may be unnecessary to differentiate between the capabilities (types) of different low-power consumption devices.

For the intermediate node, unlike the existing terminal that only needs to communicate with the network device, a terminal acting as the intermediate node also needs to have the capability (the thirteenth capability) to send the information to the low-power consumption device on the first band, and/or the capability (the second capability) to receive, on the Uu UL band, the information sent by the low-power consumption device.

For the network device, unlike the existing access network device, the network device also needs to have the capability (the twelfth capability) to send the information to the low-power consumption device on the first band. The network device still receives, on the Uu UL band, the information sent by the low-power consumption device.

In some embodiments, the capability of the low-power consumption device is notified to the intermediate node and/or the network device via higher-layer signaling. The capability of the low-power consumption device is used to indicate a band on which the low-power consumption device performs the information transmission.

In this embodiment, the operation 2102 and operation 2104 are optional. In different embodiments, one or more of these operations may be omitted or replaced.

The operation 2102 may be implemented as an independent embodiment, for example, implemented independently as a receiving method on the low-power consumption device side, a sending method on the intermediate node side, or a sending method on the network device side. The operation 2104 may be implemented as an independent embodiment, for example, implemented independently as a sending method on the low-power consumption device side, a receiving method on the network device side, or a receiving method on the intermediate node side. The operations 2102 and 2104 may be implemented as an independent embodiment, for example, implemented independently as a transmission method on the low-power consumption device side and the network device side, or implemented independently as a transmission method on the low-power consumption device side and the intermediate node side.

It should be noted that the order of the operations in the embodiment is for illustrative purposes only and does not impose a limitation on the sequence of operations when implementing the embodiment. When implementing the embodiment, the sequence of the operations may be adjusted according to the actual situation.

In summary, in the method provided in the embodiment, by having the low-power consumption device send the information to the intermediate node and/or the network device on the Uu UL band, an implementation in which the low-power consumption device performs information sending towards the intermediate node and/or the network device is provided. By having the low-power consumption device receive, on the first band, the information sent by the intermediate node and/or the network device, an implementation in which the low-power consumption device performs information receiving from the intermediate node and/or the network device is provided. This can clarify the implementation of information transmission between devices in different topologies corresponding to the low-power consumption device, thereby supporting the communication system in which the low-power consumption device is involved to be capable of being deployed in different topologies. In the topology implemented based on the Uu link, since the Uu link is an existing communication link, reusing the Uu link band can allow the topology based on the Uu link band to meet the band regulations, thereby reducing the implementation cost.

### Regarding the Case 5

FIG. 24 is a flowchart of a transmission method provided by an exemplary embodiment of the present disclosure. The method may be applied to the system illustrated in FIG. 8. The method includes the following.

**In** operation 2402, a low-power consumption device receives, on a first band, information sent by an intermediate node and/or a network device.

In some embodiments, the low-power consumption device includes a device driven by using ambient power. In some embodiments, the low-power consumption device has no power storage capability or has limited power storage capability. In some embodiments, the low-power consumption device is equivalent to or may be replaced with a zero-power consumption device, a zero-power consumption IoT device, an A-IoT device, or a passive IoT device.

The Uu link band refers to band resources used by the Uu link. In some embodiments, the Uu link band is equivalent to or may be replaced with a Uu band. In some embodiments, the Uu link is a communication link established based on a Uu interface. In some embodiments, the Uu link is a communication link established between an access network device and user equipment via the Uu interface. The Uu link is different from a sidelink of D2D communication and a sidelink of V2X communication. In some embodiments, the cellular band used by the 3GPP communication system may be referred to as the Uu band. In some embodiments, the Uu band is classified into a TDD band and an FDD band. Furthermore, the band regulations may divide band resources for other radio technologies, e.g., band resources for a satellite, Wi-Fi, and emergency rescue. In some embodiments, the Uu UL band in the present disclosure includes a band used for uplink in the FDD band, and the Uu DL band in the present disclosure includes a band used for downlink in the FDD band. In some embodiments, the FDD band belongs to an FR1.

In some embodiments, the information includes at least one of signaling, data, or a reference signal.

In some embodiments, the intermediate node includes a node between the low-power consumption device and the network device. The intermediate node has established a communication connection with the low-power consumption device and the network device, respectively. In some embodiments, the intermediate node is used to relay the information between the network device and the low-power consumption device. In some embodiments, the intermediate node is a terminal.

In some embodiments, the network device includes an access network device, e.g., a base station.

In some embodiments, in a case where the low-power consumption device has an eleventh capability, the low-power consumption device receives the information on the first band. The eleventh capability is used to indicate that the low-power consumption device supports receiving the information on the first band. In some embodiments, the first band includes at least one of a guard band or an SA band. In some embodiments, the guard band belongs to the cellular band, and the guard band includes a band that serves as a guard interval by reserving a part of bandwidth around (at the edge of) the used band within the cellular band, where the guard band is used to avoid mutual interference between adjacent frequency bands. In some embodiments, the SA band includes a band that is outside of and independent from the cellular band.

In some embodiments, the low-power consumption device receiving the information on the first band includes at least one of: the low-power consumption device receiving, on the first band, the information sent by the network device, or the low-power consumption device receiving, on the first band, the information sent by the intermediate node. In this case, the network device has a twelfth capability, and the intermediate node has a thirteenth capability. The twelfth capability is used to indicate that the network device supports sending the information to the low-power consumption device on the first band. The thirteenth capability is used to indicate that the intermediate node supports sending the information to the low-power consumption device on the first band.

**In** operation 2404, the low-power consumption device sends the information to the network device on a Uu UL band.

In some embodiments, in a case where the low-power consumption device has a first capability, the low-power consumption device sends the information on the Uu UL band. The first capability is used to indicate that the low-power consumption device supports sending the information on the Uu UL band. In some embodiments, the low-power consumption device sends the information to the network device on the Uu UL band.

**In** operation 2406, the low-power consumption device sends the information to the intermediate node on the Uu DL band.

In some embodiments, in a case where the low-power consumption device has a third capability, the low-power consumption device sends the information on the Uu DL band. The third capability is used to indicate that the low-power consumption device supports sending the information on the Uu DL band. In some embodiments, the low-power consumption device sends the information to the intermediate node on the Uu DL band. In this case, the intermediate node has a fourth capability. The fourth capability is used to indicate that the intermediate node supports receiving, on the Uu DL band, the information sent by the low-power consumption device.

It should be noted that the above content is described by implementing the sending capability and receiving capability of the low-power consumption device as different capabilities. In some embodiments, the eleventh capability is combined with at least one of the first capability or the third capability to form a capability. For example, FIG. 25 is a schematic diagram illustrating bands used by a first type of topology provided by an exemplary embodiment of the present disclosure. FIG. 26 is a schematic diagram illustrating bands used by a second type of topology provided by an exemplary embodiment of the present disclosure. The capability of the relevant device is introduced in general below with reference to the drawings.

In some embodiments, the capability (the eleventh capability) for the low-power consumption device to receive information on the first band is a default capability of the low-power consumption device. On this basis, the capability of the low-power consumption device may be classified as follows.
- A capability 1 (the first capability): sending the information to the network device on the Uu UL band.
- A capability 2 (the third capability): sending the information to the intermediate node on the Uu DL band.

In some embodiments, the eleventh capability is combined with the first capability and the third capability, respectively, that is, it is classified into two capabilities.
• A capability 1 (the eleventh capability + the first capability): receiving, on the first band, the information sent by the network device, and sending the information to the network device on the Uu UL band.
• A capability 2 (the eleventh capability + the third capability): receiving, on the first band, the information sent by the intermediate node, and sending the information to the intermediate node on the Uu DL band.

For the intermediate node, unlike the existing terminal that only needs to communicate with the network device, a terminal acting as the intermediate node also needs to have the capability (the thirteenth capability) to send the information to the low-power consumption device on the first band, and/or the capability (the fourth capability) to receive, on the Uu DL band, the information sent by the low-power consumption device.

For the network device, unlike the existing access network terminal, the network device also needs to support the capability (the twelfth capability) to send the information to the low-power consumption device on the first band. The network device still receives, on the Uu UL band, the information sent by the low-power consumption device.

In some embodiments, the capability of the low-power consumption device is notified to the intermediate node and/or the network device via higher-layer signaling. The capability of the low-power consumption device is used to indicate a band on which the low-power consumption device performs the information transmission.

In the embodiment, the operation 2402, operation 2404, and operation 2406 are optional. In different embodiments, one or more of these operations may be omitted or replaced.

The operation 2402 may be implemented as an independent embodiment, for example, implemented independently as a receiving method on the low-power consumption device side, a sending method on the intermediate node side, or a sending method on the network device side. The operation 2404 may be implemented as an independent embodiment, for example, implemented independently as a sending method on the low-power consumption device side or a receiving method on the network device side. The operation 2406 may be implemented as an independent embodiment, for example, implemented independently as a sending method on the low-power consumption device side or a receiving method on the intermediate node side. The operations 2402 and 2404 may be implemented as an independent embodiment, for example, implemented independently as a transmission method on the low power device side and the network device side. The operations 2402 and 2406 may be implemented as an independent embodiment, for example, implemented independently as a transmission method on the low-power consumption device side and the intermediate node side.

It should be noted that the order of the operations in the embodiment is for illustrative purposes only and does not impose a limitation on the sequence of operations when implementing the embodiment. When implementing the embodiment, the sequence of the operations may be adjusted according to the actual situation.

In summary, in the method provided in the embodiment, by having the low-power consumption device send the information to the network device on the Uu UL band, and send the information to the intermediate node on the Uu DL band, an implementation in which the low-power consumption device performs information sending towards the intermediate node and/or the network device is provided. By having the low-power consumption device receive, on the first band, the information sent by the intermediate node and/or the network device, an implementation in which the low-power consumption device performs information receiving from the intermediate node and/or the network device is provided. This can clarify the implementation of information transmission between devices in different topologies corresponding to the low-power consumption device, thereby supporting the communication system in which the low-power consumption device is involved to be capable of being deployed in different topologies. In the topology implemented based on the Uu link, since the Uu link is an existing communication link, reusing the Uu link band can allow the topology based on the Uu link band to meet the band regulations, thereby reducing the implementation cost.

### Regarding the Case 6

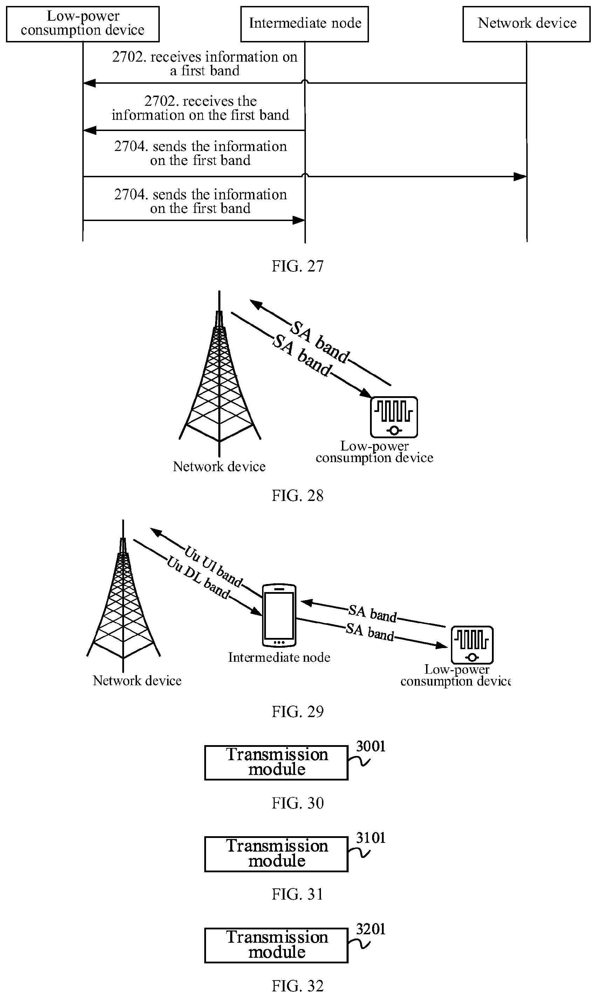

FIG. 27 is a flowchart of a transmission method provided by an exemplary embodiment of the present disclosure. This method may be applied to the system illustrated in FIG. 8. The method includes the following.

**In** operation 2702, a low-power consumption device receives, on a first band, information sent by an intermediate node and/or a network device.

In some embodiments, the low-power consumption device includes a device driven by using ambient power. In some embodiments, the low-power consumption device has no power storage capability or has limited power storage capability. In some embodiments, the low-power consumption device is equivalent to or may be replaced with a zero-power consumption device, a zero-power consumption IoT device, an A-IoT device, or a passive IoT device.

In some embodiments, the information includes at least one of signaling, data, or a reference signal.

In some embodiments, the intermediate node includes a node between the low-power consumption device and the network device. The intermediate node has established a communication connection with the low-power consumption device and the network device, respectively. In some embodiments, the intermediate node is used to relay the information between the network device and the low-power consumption device. In some embodiments, the intermediate node is a terminal.

In some embodiments, the network device includes an access network device, e.g., a base station.

In some embodiments, in a case where the low-power consumption device has an eleventh capability, the low-power consumption device receives the information on the first band. The eleventh capability is used to indicate that the low-power consumption device supports receiving the information on the first band. In some embodiments, the first band includes at least one of a guard band or an SA band. In some embodiments, the guard band belongs to the cellular band, and the guard band includes a band that serves as a guard interval by reserving a part of bandwidth around (at the edge of) the used band within the cellular band, where the guard band is used to avoid mutual interference between adjacent frequency bands. In some embodiments, the SA band includes a band that is outside of and independent from the cellular band.

In some embodiments, the low-power consumption device receiving the information on the first band includes at least one of: the low-power consumption device receiving, on the first band, the information sent by the network device, or the low-power consumption device receiving, on the first band, the information sent by the intermediate node. In this case, the network device has a twelfth capability, and the intermediate node has a thirteenth capability. The twelfth capability is used to indicate that the network device supports sending the information to the low-power consumption device on the first band. The thirteenth capability is used to indicate that the intermediate node supports sending the information to the low-power consumption device on the first band.

**In** operation 2704, the low-power consumption device sends the information to the intermediate node and/or the network device on the first band.

In some embodiments, in a case where the low-power consumption device has an eighth capability, the low-power consumption device sends the information on the first band. The eighth capability is used to indicate that the low-power consumption device supports sending the information on the first band.

In some embodiments, the low-power consumption device sending the information on the first band includes at least one of: the low-power consumption device sending the information to the network device on the first band, or the low-power consumption device sending the information to the intermediate node on the first band. In this case, the network device has a ninth capability, and the intermediate node has a tenth capability. The ninth capability is used to indicate that the network device supports receiving, on the first band, the information sent by the low-power consumption device. The tenth capability is used to indicate that the intermediate node supports receiving, on the first band, the information sent by the low-power consumption device.

It should be noted that the above content is described by implementing the sending capability and receiving capability of the low-power consumption device as different capabilities. In some embodiments, the eleventh capability is combined with the eighth capability to form a capability. For example, FIG. 28 is a schematic diagram illustrating bands used by a first type of topology provided by an exemplary embodiment of the present disclosure. FIG. 29 is a schematic diagram illustrating bands used by a second type of topology provided by an exemplary embodiment of the present disclosure. The capability of the relevant device is introduced in general below with reference to the drawings.

In some embodiments, for the low-power consumption device, regardless of the type of topology in which it locates, the low-power consumption device has the eleventh capability to support receiving, on the first band, the information sent by the network device and/or the intermediate node; and the low-power consumption device has the eighth capability to support sending the information to the network device and/or the intermediate node on the first band. In this case, it may be unnecessary to differentiate between the capabilities (types) of different low-power consumption devices.

For the intermediate node, unlike the existing terminal that only needs to communicate with the network device, a terminal acting as the intermediate node also needs to have the capability (the thirteenth capability) to send the information to the low-power consumption device on the first band, and/or the capability (the tenth capability) to receive, on the first band, the information sent by the low-power consumption device.

For the network device, unlike the existing access network device, the network device also needs to have the capability (the twelfth capability) to send the information to the low-power consumption device on the first band, and/or the capability (the ninth capability) to receive, on the first band, the information sent by the low-power consumption device.

In some embodiments, the capability of the low-power consumption device is notified to the intermediate node and/or the network device via higher-layer signaling. The capability of the low-power consumption device is used to indicate a band on which the low-power consumption device performs the information transmission.

In this embodiment, the operation 2702 and operation 2704 are optional. In different embodiments, one or more of these operations may be omitted or replaced.

The operation 2702 may be implemented as an independent embodiment, for example, implemented independently as a receiving method on the low-power consumption device side, a sending method on the intermediate node side, or a sending method on the network device side. The operation 2704 may be implemented as an independent embodiment, for example, implemented independently as a sending method on the low-power consumption device side, a receiving method on the network device side, or a receiving method on the intermediate node side. The operations 2702 and 2704 may be implemented as an independent embodiment, for example, implemented independently as a transmission method on the low-power consumption device side and the network device side, or implemented independently as a transmission method on the low-power consumption device side and the intermediate node side.

It should be noted that the order of the operations in the embodiment is for illustrative purposes only and does not impose a limitation on the sequence of operations when implementing the embodiment. When implementing the embodiment, the sequence of the operations may be adjusted according to the actual situation.

In summary, in the method provided in the embodiment, by having the low-power consumption device send the information to the intermediate node and/or the network device on the first band, an implementation in which the low-power consumption device performs information sending towards the intermediate node and/or the network device is provided. By having the low-power consumption device receive, on the first band, the information sent by the network device and/or the intermediate node, an implementation in which the low-power consumption device performs information receiving from the intermediate node and/or the network device is provided. This can clarify the implementation of information transmission between devices in different topologies corresponding to the low-power consumption device, thereby supporting the communication system in which the low-power consumption device is involved to be capable of being deployed in different topologies. In the topology implemented based on the first band, since the first band can be flexibly set, the flexible deployment of the low-power consumption device can be achieved.

It should be noted that the sequence of the method operations provided in the embodiments of the present disclosure may be appropriately adjusted, and the operations may be correspondingly added or removed based on the cases. Furthermore, different operations may be freely combined to form new embodiments. Any methods with variations that can be readily conceived by a person skilled in the art within the technical scope disclosed in the present disclosure shall be covered by the protection scope of the present disclosure, and thus will not be further repeated here. In addition, the sequence of the different cases described above does not imply a preference and is provided merely for convenience of description.

FIG. 30 is a block diagram of a transmission apparatus provided by an exemplary embodiment of the present disclosure. The apparatus may be implemented as a low-power consumption device, or as a part of a low-power consumption device through software, hardware or a combination thereof. The apparatus includes a transmission module 3001.

The transmission module 3001 is configured to perform an information transmission on a Uu link band.

In some embodiments, the apparatus includes a device driven by using ambient power, for example, using the ambient power such as radio frequency power, light power, solar power, thermal power, or mechanical power. In some embodiments, the apparatus has no power storage capability or has limited power storage capability. In some embodiments, the apparatus is equivalent to or may be replaced with a low-power consumption device, a zero-power consumption device, a zero-power consumption IoT device, an ambient IoT (A-IoT) device, or a passive IoT device.

The Uu link band refers to band resources used by the Uu link. In some embodiments, the Uu link band is equivalent to or may be replaced with a Uu band. In some embodiments, the Uu link is a communication link established based on a Uu interface. In some embodiments, the Uu link is a communication link established between an access network device (e.g., a base station) and user equipment (e.g., a terminal) via the Uu interface. The Uu link is different from a sidelink of D2D communication and a sidelink of V2X communication. In some embodiments, the cellular band used by the 3GPP communication system may be referred to as the Uu band. In some embodiments, the Uu band is classified into a TDD band and an FDD band. Furthermore, the band regulations may divide band resources for other radio technologies, e.g., band resources for a satellite, Wi-Fi, and emergency rescue. In some embodiments, the Uu UL band in the present disclosure includes a band used for uplink in the FDD band, and the Uu DL band in the present disclosure includes a band used for downlink in the FDD band. In some embodiments, the FDD band belongs to an FR1.

In some embodiments, the apparatus performing the information transmission includes at least one of: sending information or receiving the information. The information transmitted and/or received by the apparatus includes at least one of signaling, data, or a reference signal.

In some embodiments, the apparatus performs the information transmission with an intermediate node on the Uu link band. The intermediate node includes a node between the apparatus and a network device. The intermediate node has established a communication connection with the apparatus and the network device, respectively. In some embodiments, the intermediate node is used to relay the information between the network device and the apparatus. In some embodiments, the intermediate node is a terminal.

In some embodiments, the apparatus performs the information transmission with the network device on the Uu link band. In some embodiments, the network device includes an access network device, e.g., a base station.

In some embodiments, the transmission module 3001 is configured to send the information on at least one of the Uu UL band or the Uu DL band, and/or to receive the information on at least one of the Uu UL band or the Uu DL band. The Uu UL is a communication link for user equipment to send information to an access network device, and the Uu DL is a communication link for an access network device to send information to user equipment.

In some embodiments, the apparatus sends the information to the intermediate node on at least one of the Uu UL band or the Uu DL band. In some embodiments, the apparatus receives, on at least one of the Uu UL band or the Uu DL band, the information sent by the intermediate node. In some embodiments, the apparatus sends the information to the network device on at least one of the Uu UL band or the Uu DL band. In some embodiments, the apparatus receives, on at least one of the Uu UL band or the Uu DL band, the information sent by the network device. In some embodiments, the apparatus performs the information transmission with the intermediate node and/or the network device on a band other than the Uu link band.

For the above-mentioned information transmission, the relevant devices require to have corresponding capabilities. Capabilities of the apparatus, the intermediate node, and the network device are introduced below.

In some embodiments, the apparatus has at least one of a first capability, a third capability, a fifth capability, a sixth capability, an eighth capability, or an eleventh capability. Among them, the first capability, the third capability, and the eighth capability correspond to sending by the apparatus; and the fifth capability, the sixth capability, and the eleventh capability correspond to receiving by the apparatus. In some embodiments, the intermediate device has at least one of a second capability, a fourth capability, a seventh capability, a tenth capability, or a thirteenth capability. Among them, the second capability, the fourth capability, and the tenth capability correspond to receiving by the intermediate node; and the seventh capability and the thirteenth capability correspond to sending by the intermediate node. In some embodiments, the network device has at least one of a ninth capability or a twelfth capability. Among them, the ninth capability corresponds to receiving by the network device, and the twelfth capability corresponds to sending by the network device. For details, please refer to the following introduction.

### Regarding Capability of the Apparatus

In some embodiments, the transmission module 3001 is configured to send the information on the Uu UL band in a case where the apparatus has the first capability. The first capability is used to indicate that the apparatus supports sending the information on the Uu UL band.

In some embodiments, the transmission module 3001 is configured to perform at least one of: sending the information to the network device on the Uu UL band, or sending the information to the intermediate node on the Uu UL band. In this case, the intermediate node has the second capability. The second capability is used to indicate that the intermediate node supports receiving, on the Uu UL band, the information sent by the apparatus.

In some embodiments, the transmission module 3001 is configured to send the information on the Uu DL band in a case where the apparatus has the third capability. The third capability is used to indicate that the apparatus supports sending the information on the Uu DL band. In some embodiments, the transmission module 3001 is configured to send the information to the intermediate node on the Uu DL band. In this case, the intermediate node has the fourth capability. The fourth capability is used to indicate that the intermediate node supports receiving, on the Uu DL band, the information sent by the apparatus.

In some embodiments, the transmission module 3001 is configured to receive the information on the Uu DL band in a case where the apparatus has the fifth capability. The fifth capability is used to indicate that the apparatus supports receiving the information on the Uu DL band. In some embodiments, the transmission module 3001 is configured to receive, on the Uu DL band, the information sent by the network device.

In some embodiments, the transmission module 3001 is configured to receive the information on the Uu UL band in a case where the apparatus has the sixth capability. The sixth capability is used to indicate that the apparatus supports receiving the information on the Uu UL band. In some embodiments, the transmission module 3001 is configured to receive, on the Uu UL band, the information sent by the intermediate node. In this case, the intermediate node has the seventh capability. The seventh capability is used to indicate that the intermediate node supports sending the information to the apparatus on the Uu UL band.

In some embodiments, the transmission module 3001 is configured to send the information on a first band in a case where the apparatus has the eighth capability. The eighth capability is used to indicate that the apparatus supports sending the information on the first band. In some embodiments, the first band includes at least one of a guard band (guard-band) or a standalone band (SA-band). In some embodiments, the guard band belongs to the cellular band, and the guard band includes a band that serves as a guard interval by reserving a part of bandwidth around (at the edge of) the used band within the cellular band, where the guard band is used to prevent mutual interference between adjacent frequency bands. In some embodiments, the standalone band includes a band that is outside of and independent from the cellular band.

In some embodiments, the transmission module 3001 is configured to perform at least one of: sending the information to the network device on the first band, or sending the information to the intermediate node on the first band. In this case, the network device has the ninth capability, and the intermediate node has the tenth capability. The ninth capability is used to indicate that the network device supports receiving, on the first band, the information sent by the apparatus. The tenth capability is used to indicate that the intermediate node supports receiving the information sent by the apparatus on the first band.

In some embodiments, the transmission module 3001 is configured to receive the information on the first band in a case where the apparatus has the eleventh capability. The eleventh capability is used to indicate that the apparatus supports receiving the information on the first band.

In some embodiments, the transmission module 3001 is configured to perform at least one of: receiving, on the first band, the information sent by the network device; or receiving, on the first band, the information sent by the intermediate node. In this case, the network device has the twelfth capability, and the intermediate node has the thirteenth capability. The twelfth capability is used to indicate that the network device supports sending the information to the apparatus on the first band. The thirteenth capability is used to indicate that the intermediate node supports sending the information to the apparatus on the first band.

In some embodiments, the capability of the apparatus is notified to the intermediate node and/or the network device via higher-layer signaling. The capability of the apparatus is used to indicate a band on which the apparatus performs the information transmission. The capability of the apparatus includes at least one of the first capability, the third capability, the fifth capability, the sixth capability, the eighth capability, or the eleventh capability.

It should be noted that the above-mentioned capability corresponding to sending by the apparatus and capability corresponding to receiving by the apparatus may be freely combined, which is not limited in the embodiments of the present disclosure. Possible cases of combinations are introduced below.

### Regarding Capability of the Intermediate Node

In some embodiments, in a case where the intermediate node has the second capability, the intermediate node receives, on the Uu UL band, information sent by the apparatus. In this case, the apparatus has the first capability. The second capability is used to indicate that the intermediate node supports receiving, on the Uu UL band, the information sent by the apparatus. The first capability is used to indicate that the apparatus supports sending the information on the Uu UL band.

In some embodiments, in a case where the intermediate node has the fourth capability, the intermediate node receives, on the Uu DL band, information sent by the apparatus. In this case, the apparatus has the third capability. The fourth capability is used to indicate that the intermediate node supports receiving, on the Uu DL band, the information sent by the apparatus. The third capability is used to indicate that the apparatus supports sending the information on the Uu DL band.

In some embodiments, in a case where the intermediate node has the seventh capability, the intermediate node sends information to the apparatus on the Uu UL band. In this case, the apparatus has the sixth capability. The seventh capability is used to indicate that the intermediate node supports sending the information to the apparatus on the Uu UL band. The sixth capability is used to indicate that the apparatus supports receiving the information on the Uu UL band.

In some embodiments, in a case where the intermediate node has the tenth capability, the intermediate node receives, on the first band, information sent by the apparatus. In this case, the apparatus has the eighth capability. The tenth capability is used to indicate that the intermediate node supports receiving, on the first band, the information sent by the apparatus. The eighth capability is used to indicate that the apparatus supports sending the information on the first band.

In some embodiments, in a case where the intermediate node has the thirteenth capability, the intermediate node sends information to the apparatus on a first band. In this case, the apparatus has the eleventh capability. The thirteenth capability is used to indicate that the intermediate node supports sending the information to the apparatus on the first band. The eleventh capability is used to indicate that the apparatus supports receiving the information on the first band.

It should be noted that the above-mentioned capability corresponding to sending by the intermediate node and capability corresponding to receiving by the intermediate node may be freely combined, which is not limited in the embodiments of the present disclosure.

### Regarding Capability of Network Device

In some embodiments, the network device receives, on the Uu UL band, information sent by the apparatus. In this case, the apparatus has the first capability. The first capability is used to indicate that the apparatus supports sending the information on the Uu UL band.

In some embodiments, the network device sends information to the apparatus on the Uu DL band. In this case, the apparatus has the fifth capability. The fifth capability is used to indicate that the apparatus supports receiving the information on the Uu DL band.

In some embodiments, in a case where the network device has the ninth capability, the network device receives, on the first band, the information sent by the apparatus. In this case, the apparatus has the eighth capability. The ninth capability is used to indicate that the network device supports receiving, on the first band, the information sent by the apparatus. The eighth capability is used to indicate that the apparatus supports sending the information on the first band.

In some embodiments, in a case where the network device has the twelfth capability, the network device sends the information to the apparatus on the first band. In this case, the apparatus has the eleventh capability. The first band includes at least one of the guard band or the standalone band. The twelfth capability is used to indicate that the network device supports sending the information to the apparatus on the first band. The eleventh capability is used to indicate that the apparatus supports receiving the information on the first band.

It should be noted that the above-mentioned capability corresponding to sending by the network device and capability corresponding to receiving by the network device may be freely combined, which is not limited in the embodiments of the present disclosure.

In some embodiments, the apparatus provided by the embodiments of the present disclosure includes a transmission module 3001, which supports performing all transmission-related operations performed by the low-power consumption device in various embodiments described above.

In some embodiments, the apparatus provided by the embodiments of the present disclosure includes multiple transmission modules 3001. The multiple transmission modules 3001 respectively support performing a part of the transmission-related operations performed by the low-power consumption device in various embodiments described above. For example, the transmission module 3001 may be classified into a sending module for performing sending operations and a receiving module for performing receiving operations.

In some embodiments, operations performed by different transmission modules 3001 may be completely identical, partially identical, or completely different.

In summary, for the apparatus provided by the embodiment, by having the apparatus perform the information transmission on the Uu link band, an implementation in which the apparatus performs the information transmission with the intermediate node and/or the network device is provided. This can clarify the implementation of information transmission between devices in different topologies corresponding to the apparatus, thereby supporting the communication system in which the apparatus is involved to be capable of being deployed in different topologies. In the above-mentioned topology implemented based on the Uu link, since the Uu link is an existing communication link, reusing the Uu link band can allow the topology based on the Uu link band to meet the band regulations, thereby reducing the implementation cost.

FIG. 31 is a block diagram of a transmission apparatus provided by an exemplary embodiment of the present disclosure. The apparatus may be implemented as an intermediate node, or as part of an intermediate node through software, hardware or a combination thereof. The apparatus includes a transmission module 3101.

The transmission module 3101 is configured to perform an information transmission with a low-power consumption device on a Uu link band.

In some embodiments, the low-power consumption device includes a device driven by using ambient power. In some embodiments, the low-power consumption device has no power storage capability or has limited power storage capability. In some embodiments, the low-power consumption device is equivalent to or may be replaced with a zero-power consumption device, a zero-power consumption IoT device, an A-IoT device, or a passive IoT device.

The Uu link band refers to band resources used by the Uu link. In some embodiments, the Uu link band is equivalent to or may be replaced with a Uu band. In some embodiments, the Uu link is a communication link established based on a Uu interface. In some embodiments, the Uu link is a communication link established between an access network device and user equipment via the Uu interface. The Uu link is different from a sidelink of D2D communication and a sidelink of V2X communication. In some embodiments, the cellular band used by the 3GPP communication system may be referred to as the Uu band. In some embodiments, the Uu band is classified into a TDD band and an FDD band. Furthermore, the band regulations may divide band resources for other radio technologies, e.g., band resources for a satellite, Wi-Fi, and emergency rescue. In some embodiments, the Uu UL band in the present disclosure includes a band used for uplink in the FDD band, and the Uu DL band in the present disclosure includes a band used for downlink in the FDD band. In some embodiments, the FDD band belongs to an FR1.

In some embodiments, performing the information transmission with the low-power consumption device includes at least one of: sending information to the low-power consumption device, or receiving the information sent by the low-power consumption device. The transmitted and/or received information includes at least one of signaling, data, or a reference signal.

In some embodiments, the apparatus includes a node between the low-power consumption device and the network device. The apparatus has established a communication connection with the low-power consumption device and the network device, respectively. In some embodiments, the apparatus is used to relay the information between the network device and the low-power consumption device. In some embodiments, the apparatus is a terminal.

In some embodiments, the apparatus sends the information to the low-power consumption device on at least one of the Uu UL band or the Uu DL band, and/or the apparatus receives, on at least one of the Uu UL band or the Uu DL band, the information sent by the low-power consumption device. In some embodiments, the apparatus performs the information transmission with the low-power consumption device on a band other than the Uu link band.

In some embodiments, the transmission module 3101 is configured to receive, on the Uu UL band, information sent by the low-power consumption device in a where the apparatus has a second capability. In this case, the low-power consumption device has a first capability. The second capability is used to indicate that the apparatus supports receiving, on the Uu UL band, the information sent by the low-power consumption device. The first capability is used to indicate that the low-power consumption device supports sending the information on the Uu UL band.

In some embodiments, the transmission module 3101 is configured to receive, on the Uu DL band, information sent by the low-power consumption device in a case where the apparatus has a fourth capability. In this case, the low-power consumption device has a third capability. The fourth capability is used to indicate that the apparatus supports receiving, on the Uu DL band, the information sent by the low-power consumption device. The third capability is used to indicate that the low-power consumption device supports sending the information on the Uu DL band.

In some embodiments, the transmission module 3101 is configured to send information to the low-power consumption device on the Uu UL band in a case where the apparatus has a seventh capability. In this case, the low-power consumption device has a sixth capability. The seventh capability is used to indicate that the apparatus supports sending the information to the low-power consumption device on the Uu UL band. The sixth capability is used to indicate that the low-power consumption device supports receiving the information on the Uu UL band.

In some embodiments, the transmission module 3101 is configured to receive, on a first band, information sent by the low-power consumption device in a case where the apparatus has a tenth capability. In this case, the low-power consumption device has an eighth capability. The tenth capability is used to indicate that the apparatus supports receiving, on the first band, the information sent by the low-power consumption device. The eighth capability is used to indicate that the low-power consumption device supports sending the information on the first band. In some embodiments, the first band includes at least one of a guard band or an SA band. In some embodiments, the guard band belongs to a cellular band, and the guard band includes a band that serves as a guard interval by reserving a part of bandwidth around (at the edge of) the used band within the cellular band, where the guard band is used to avoid mutual interference between adjacent frequency bands. In some embodiments, the SA band includes a band that is outside of the cellular band and independent of the cellular band.

In some embodiments, the transmission module 3101 is configured to send information to the low-power consumption device on the first band in a case where the apparatus has a thirteenth capability. In this case, the low-power consumption device has an eleventh capability. The thirteenth capability is used to indicate that the apparatus supports sending the information to the low-power consumption device on the first band. The eleventh capability is used to indicate that the low-power consumption device supports receiving the information on the first band.

It should be noted that the above-mentioned capability corresponding to sending by the apparatus and capability corresponding to receiving by the apparatus may be freely combined, which is not limited in the embodiments of the present disclosure.

In some embodiments, the apparatus provided in the embodiment of the present disclosure includes a transmission module 3101, which supports performing all transmission-related operations performed by the low-power consumption device in various embodiments described above.

In some embodiments, the apparatus provided in the embodiment of the present disclosure includes multiple transmission modules 3101. The multiple transmission modules 3101 respectively support performing a part of the transmission-related operations performed by the low-power consumption device in various embodiments described above. For example, the transmission module 3101 may be classified into a sending module for performing sending operations and a receiving module for performing receiving operations.

In some embodiments, operations performed by different transmission modules 3101 are completely identical, partially identical, or completely different.

In summary, for the apparatus provided in the embodiment, by having the apparatus perform the information transmission with the low-power consumption device on the Uu link band, an implementation of the information transmission between the apparatus and the low-power consumption device is provided. This can clarify the implementation of information transmission between devices in different topologies corresponding to the low-power consumption device, thereby supporting the communication system in which the low-power consumption device is involved to be capable of being deployed in different topologies. In the above-mentioned topology implemented based on the Uu link, since the Uu link is an existing communication link, reusing the Uu link band can allow the topology based on the Uu link band to meet the band regulations, thereby reducing the implementation cost.

FIG. 32 is a block diagram of a transmission apparatus provided in an exemplary embodiment of the present disclosure. The apparatus may be implemented as a network device, or as a part of a network device through software, hardware or a combination thereof. The apparatus includes a transmission module 3201.

The transmission module 3201 is configured to perform an information transmission with a low-power consumption device on a Uu link band.

In some embodiments, the low-power consumption device includes a device driven by using ambient power. In some embodiments, the low-power consumption device has no power storage capability or has limited power storage capability. In some embodiments, the low-power consumption device is equivalent to or may be replaced with a zero-power consumption device, a zero-power consumption IoT device, an A-IoT device, or a passive IoT device.

The Uu link band refers to band resources used by the Uu link. In some embodiments, the Uu link band is equivalent to or may be replaced with a Uu band. In some embodiments, the Uu link is a communication link established based on a Uu interface. In some embodiments, the Uu link is a communication link established between an access network device and user equipment via the Uu interface. The Uu link is different from a sidelink of D2D communication and a sidelink of V2X communication. In some embodiments, the cellular band used by the 3GPP communication system may be referred to as the Uu band. In some embodiments, the Uu band is classified into a TDD band and an FDD band. Furthermore, the band regulations may divide band resources for other radio technologies, e.g., band resources for a satellite, Wi-Fi, and emergency rescue. In some embodiments, the Uu UL band in the present disclosure includes a band used for uplink in the FDD band, and the Uu DL band in the present disclosure includes a band used for downlink in the FDD band. In some embodiments, the FDD band belongs to an FR1.

In some embodiments, performing the information transmission with the low-power consumption device includes at least one of: sending information to the low-power consumption device, or receiving the information sent by the low-power consumption device. The transmitted and/or received information includes at least one of signaling, data, or a reference signal.

In some embodiments, the apparatus includes an access network device, e.g., a base station.

In some embodiments, the apparatus sends the information to the low-power consumption device on at least one of the Uu UL band or the Uu DL band, and/or the apparatus receives, on at least one of the Uu UL band or the Uu DL band, the information sent by the low-power consumption device. In some embodiments, the apparatus performs the information transmission with the low-power consumption device on a band other than the Uu link band.

In some embodiments, the transmission module 3201 is configured to receive, on the Uu UL band, the information sent by the low-power consumption device. In this case, the low-power consumption device has a first capability. The first capability is used to indicate that the low-power consumption device supports sending the information on the Uu UL band.

In some embodiments, the transmission module 3201 is configured to send the information to the low-power consumption device on the Uu DL band. In this case, the low-power consumption device has a fifth capability. The fifth capability is used to indicate that the low-power consumption device supports receiving the information on the Uu DL band.

In some embodiments, the transmission module 3201 is configured to receive, on a first band, the information sent by the low-power consumption device in a case where the apparatus has a ninth capability. In this case, the low-power consumption device has an eighth capability. The ninth capability is used to indicate that the apparatus supports receiving, on the first band, the information sent by the low-power consumption device. The eighth capability is used to indicate that the low-power consumption device supports sending the information on the first band. In some embodiments, the first band includes at least one of a guard band or an SA band. In some embodiments, the guard band belongs to a cellular band, and the guard band includes a band that serves as a guard interval by reserving a part of bandwidth around (at the edge of) the used band within the cellular band, where the guard band is used to avoid mutual interference between adjacent frequency bands. In some embodiments, the SA band includes a band that is outside of and independent of the cellular band.

In some embodiments, the transmission module 3201 is configured to send the information to the low-power consumption device on the first band in a case where the apparatus has a twelfth capability. In this case, the low-power consumption device has an eleventh capability. The first band includes at least one of a guard band or an SA band. The twelfth capability is used to indicate that the apparatus supports sending the information to the low-power consumption device on the first band. The eleventh capability is used to indicate that the low-power consumption device supports receiving the information on the first band.

It should be noted that the above-mentioned capability corresponding to sending by the apparatus and capability corresponding to receiving by the apparatus may be freely combined, which is not limited in the embodiments of the present disclosure.

In some embodiments, the apparatus provided in the embodiment of the present disclosure includes a transmission module 3201, which supports performing all transmission-related operations performed by the low-power consumption device in various embodiments described above.

In some embodiments, the apparatus provided in the embodiment of the present disclosure includes multiple transmission modules 3201. The multiple transmission modules 3201 respectively support performing a part of the transmission-related operations performed by the low-power consumption device in various embodiments described above. For example, the transmission module 3201 may be classified into a sending module for performing sending operations and a receiving module for performing receiving operations.

In some embodiments, operations performed by different transmission modules 3201 are completely identical, partially identical, or completely different.

In summary, for the apparatus provided in the embodiment, by having the apparatus perform the information transmission with the low-power consumption device on the Uu link band, an implementation of the information transmission between the low-power consumption device and the apparatus is provided. This can clarify the implementation of information transmission between devices in different topologies corresponding to the low-power consumption device, thereby supporting the communication system in which the low-power consumption device is involved to be capable of being deployed in different topologies. In the above-mentioned topology implemented based on the Uu link, since the Uu link is an existing communication link, reusing the Uu link band can allow the topology based on the Uu link band to meet the band regulations, thereby reducing the implementation cost.

It should be noted that, regarding the implementation of functions by the apparatus provided in the above embodiments, the division of functional modules is for illustrative purposes only. In practical applications, the above-mentioned functions may be allocated to and completed by different functional modules as actually required, meaning the internal structure of the device may be divided into different functional modules to accomplish all or part of the functions described above.

Regarding the apparatus in the above embodiments, the specific manner in which each module performs its operations has been described in detail in the embodiments related to the method, which will not be repeated in detail here.

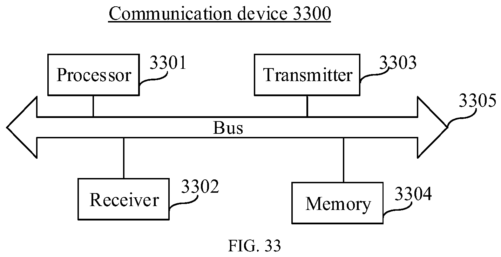

FIG. 33 is a schematic structural diagram of a communication device provided in an exemplary embodiment of the present disclosure. The communication device may be a terminal or a network device. The communication device 3300 includes: a processor 3301, a receiver 3302, a transmitter 3303, a memory 3304, and a bus 3305.

The processor 3301 includes one or more processing cores. The processor 3301 executes various functional applications and information processing by running software programs and modules.

The receiver 3302 and the transmitter 3303 may be implemented as a communication component, and the communication component may be a communication chip.

The memory 3304 is connected to the processor 3301 via the bus 3305. The memory 3304 may be configured to store at least one instruction, and the processor 3301 is configured to perform the at least one instruction, to implement various operations in the method embodiments described above.

Furthermore, the memory 3304 may be implemented by any type of volatile storage device or non-volatile storage device, or a combination thereof. Such volatile storage device or non-volatile storage device includes, but is not limited to: a magnetic disk or an optical disc, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In some embodiments, in a case where the communication device is implemented as a low-power consumption device, the processor 3301 is configured to perform an information transmission on a Uu link band. In some embodiments, the processor 3301 is further configured to perform other processing-related operations in the method embodiments described above.

In some embodiments, in a case where the communication device is implemented as an intermediate node, the processor 3301 is configured to perform an information transmission with a low-power consumption device on a Uu link band, where the intermediate node includes a node between the low-power consumption device and a network device. In some embodiments, the processor 3301 is further configured to perform other processing-related operations in the method embodiments described above.

In some embodiments, in a case where the communication device is implemented as a network device, the processor 3301 is configured to perform an information transmission with a low-power consumption device on a Uu link band. In some embodiments, the processor 3301 is further configured to perform other processing-related operations in the method embodiments described above.

In some embodiments, the receiver 3302 performs signal/data receiving independently, or the processor 3301 controls the receiver 3302 to perform signal/data receiving, or the processor 3301 requests the receiver 3302 to perform signal/data receiving, or the processor 3301 cooperates with the receiver 3302 to perform signal/data receiving.

In some embodiments, the transmitter 3303 performs signal/data sending independently, or the processor 3301 controls the transmitter 3303 to perform signal/data sending, or the processor 3301 requests the transmitter 3303 to perform signal/data sending, or the processor 3301 cooperates with the transmitter 3303 to perform signal/data sending.

In some embodiments, the processor 3301 and the receiver 3302 may be implemented as a single module, or the processor 3301 may be implemented as a part of the receiver 3302.

In some embodiments, the receiver 3302 may be implemented as a receiving set. Optionally, the receiving set may or may not include the processor 3301.

In some embodiments, the processor 3301 and the transmitter 3303 may be implemented as a single module, or the processor 3301 may be implemented as a part of the transmitter 3303.

In some embodiments, the transmitter 3303 may be implemented as a transmitting set. Optionally, the receiving set may or may not include the processor 3301.

In an exemplary embodiment, a computer-readable storage medium is also provided. The computer-readable storage medium stores at least one instruction, at least one program segment, a code set, or an instruction set. The at least one instruction, the at least one program segment, the code set, or the instruction set is loaded and executed by a processor to implement the transmission method provided in various method embodiments described above.

In an exemplary embodiment, a chip is also provided. The chip includes a programmable logic circuit and/or program instructions. When the chip is run on a communication device, the chip is configured to implement the transmission method provided in various method embodiments described above based on the programmable logic circuit and/or program instructions.

In an exemplary embodiment, a computer program product is also provided. When the computer program product is run on a processor of a computer device, the computer device is enabled to perform the transmission method described above.

In an exemplary embodiment, a computer program is also provided. The computer program includes computer instructions. A processor of a computer device executes the computer instructions to enable the computer device to perform the transmission method described above.

A person skilled in the art should recognize that, in one or more of the examples described above, the functions described in the embodiments of the present disclosure can be implemented in hardware, software, firmware, or any combination thereof. When implemented in software, these functions may be stored in a computer-readable medium or transmitted as one or more instructions or code on a computer-readable medium. The computer-readable medium includes a computer storage medium and a communication medium, where the communication medium includes any medium that facilitates the transfer of a computer program from one place to another. A storage medium may be any available medium that can be accessed by a general-purpose computer or a dedicated-purpose computer.

The above descriptions are merely exemplary embodiments of the present disclosure and are not intended to limit the present disclosure. Any modifications, equivalent replacements, improvements, etc., made within the spirit and principle of the present disclosure shall be included within the protection scope of the present disclosure.

## Claims

1. A transmission method, performed by a low-power consumption device and comprising:
performing, by the low-power consumption device, an information transmission on a Uu link band.

2. The method according to claim 1, wherein performing, by the low-power consumption device, the information transmission on the Uu link band comprises:
sending, by the low-power consumption device, information on at least one of a Uu uplink (UL) band or a Uu downlink (DL) band, and/or, receiving, by the low-power consumption device, the information on at least one of the Uu UL band or the Uu DL band.

3. The method according to claim 2, wherein sending, by the low-power consumption device, the information on at least one of the Uu UL band or the Uu DL band comprises:
in a case where the low-power consumption device has a first capability, sending, by the low-power consumption device, the information on the Uu UL band.

4. The method according to claim 3, wherein sending, by the low-power consumption device, the information on the Uu UL band comprises at least one of:
sending, by the low-power consumption device, the information to a network device on the Uu UL band; or
sending, by the low-power consumption device, the information to an intermediate node on the Uu UL band, the intermediate node having a second capability,
wherein the intermediate node comprises a node between the low-power consumption device and the network device.

5. The method according to any one of claims 2 to 4, wherein sending, by the low-power consumption device, the information on at least one of the Uu UL band or the Uu DL band comprises:
in a case where the low-power consumption device has a third capability, sending, by the low-power consumption device, the information on the Uu DL band.

6. The method according to claim 5, wherein sending, by the low-power consumption device, the information on the Uu DL band comprises:
sending, by the low-power consumption device, the information to an intermediate node on the Uu DL band, the intermediate node having a fourth capability,
wherein the intermediate node comprises a node between the low-power consumption device and the network device.

7. The method according to any one of claims 2 to 6, wherein receiving, by the low-power consumption device, the information on at least one of the Uu UL band or the Uu DL band comprises at least one of:
in a case where the low-power consumption device has a fifth capability, receiving, by the low-power consumption device, the information on the Uu DL band; or
in a case where the low-power consumption device has a sixth capability, receiving, by the low-power consumption device, the information on the Uu UL band.

8. The method according to claim 7, wherein receiving, by the low-power consumption device, the information on the Uu DL band comprises:
receiving, by the low-power consumption device on the Uu DL band, the information sent by a network device.

9. The method according to claim 7 or 8, wherein receiving, by the low-power consumption device, the information on the Uu UL band comprises:
receiving, by the low-power consumption device on the Uu UL band, the information sent by an intermediate node, the intermediate node having a seventh capability,
wherein the intermediate node comprises a node between the low-power consumption device and a network device.

10. The method according to any one of claims 1 to 9, further comprising:
in a case where the low-power consumption device has an eighth capability, sending, by the low-power consumption device, information on a first band,
wherein the first band comprises at least one of a guard band or a standalone band.

11. The method according to claim 10, wherein sending, by the low-power consumption device, the information on the first band comprises at least one of:
sending, by the low-power consumption device, the information to a network device on the first band, the network device having a ninth capability; or
sending, by the low-power consumption device, the information to an intermediate node on the first band, the intermediate node having a tenth capability,
wherein the intermediate node comprises a node between the low-power consumption device and the network device.

12. The method according to any one of claims 1 to 11, further comprising:
in a case where the low-power consumption device has an eleventh capability, receiving, by the low-power consumption device, information on a first band,
wherein the first band comprises at least one of a guard band or a standalone band.

13. The method according to claim 12, wherein receiving, by the low-power consumption device, the information on the first band comprises at least one of:
receiving, by the low-power consumption device on the first band, the information sent by a network device, the network device having a twelfth capability; or
receiving, by the low-power consumption device on the first band, the information sent by an intermediate node, the intermediate node having a thirteenth capability,
wherein the intermediate node comprises a node between the low-power consumption device and the network device.

14. The method according to any one of claims 1 to 13, wherein a capability of the low-power consumption device is notified to an intermediate node and/or a network device via higher-layer signaling,
wherein the capability of the low-power consumption device is used to indicate a band on which the low-power consumption device performs the information transmission, and the intermediate node comprises a node between the low-power consumption device and the network device.

15. The method according to any one of claims 1 to 14, wherein the information comprises at least one of signaling or data.

16. A transmission method, performed by an intermediate node and comprising:
performing, by the intermediate node, an information transmission with a low-power consumption device on a Uu link band,
wherein the intermediate node comprises a node between the low-power consumption device and a network device.

17. The method according to claim 16, wherein performing, by the intermediate node, the information transmission with the low-power consumption device on the Uu link band comprises:
in a case where the intermediate node has a second capability, receiving, by the intermediate node on a Uu uplink (UL) band, information sent by the low-power consumption device, wherein the low-power consumption device has a first capability.

18. The method according to claim 16 or 17, wherein performing, by the intermediate node, the information transmission with the low-power consumption device on the Uu link band comprises:
in a case where the intermediate node has a fourth capability, receiving, by the intermediate node on a Uu downlink (DL) band, information sent by the low-power consumption device, wherein the low-power consumption device has a third capability.

19. The method according to any one of claims 16 to 18, wherein performing, by the intermediate node, the information transmission with the low-power consumption device on the Uu link band comprises:
in a case where the intermediate node has a seventh capability, sending, by the intermediate node, information to the low-power consumption device on a Uu UL band, wherein the low-power consumption device has a sixth capability.

20. The method according to any one of claims 16 to 19, further comprising:
in a case where the intermediate node has a tenth capability, receiving, by the intermediate node on a first band, information sent by the low-power consumption device, the low-power consumption device having an eighth capability,
wherein the first band comprises at least one of a guard band or a standalone band.

21. The method according to any one of claims 16 to 20, further comprising:
in a case where the intermediate node has a thirteenth capability, sending, by the intermediate node, information to the low-power consumption device on a first band, the low-power consumption device having an eleventh capability,
wherein the first band comprises at least one of a guard band or a standalone band.

22. The method according to any one of claims 16 to 21, wherein a capability of the low-power consumption device is notified to the intermediate node via higher-layer signaling,
wherein the capability of the low-power consumption device is used to indicate a band on which the low-power consumption device performs the information transmission.

23. The method according to any one of claims 16 to 22, wherein the information comprises at least one of signaling or data.

24. A transmission method, performed by a network device and comprising:
performing, by the network device, an information transmission with a low-power consumption device on a Uu link band.

25. The method according to claim 24, wherein performing, by the network device, the information transmission with the low-power consumption device on the Uu link band comprises:
receiving, by the network device on a Uu uplink (UL) band, information sent by the low-power consumption device, the low-power consumption device having a first capability.

26. The method according to claim 24 or 25, wherein performing, by the network device, the information transmission with the low-power consumption device on the Uu link band comprises:
sending, by the network device, information to the low-power consumption device on a Uu downlink (DL) band, the low-power consumption device having a fifth capability.

27. The method according to any one of claims 24 to 26, further comprising:
in a case where the network device has a ninth capability, receiving, by the network device on a first band, information sent by the low-power consumption device, the low-power consumption device having an eighth capability,
wherein the first band comprises at least one of a guard band or a standalone band.

28. The method according to any one of claims 24 to 27, further comprising:
in a case where the network device has a twelfth capability, sending, by the network device, information to the low-power consumption device on a first band, the low-power consumption device having an eleventh capability,
wherein the first band comprises at least one of a guard band or a standalone band.

29. The method according to any one of claims 24 to 28, wherein a capability of the low-power consumption device is notified to the network device via higher-layer signaling,
wherein the capability of the low-power consumption device is used to indicate a band on which the low-power consumption device performs the information transmission.

30. The method according to any one of claims 24 to 29, wherein the information comprises at least one of signaling or data.

31. A transmission apparatus, comprising:
a transmission module, configured to perform an information transmission on a Uu link band.

32. A transmission apparatus, comprising:
a transmission module, configured to perform an information transmission with a low-power consumption device on a Uu link band,
wherein the apparatus comprises a node between the low-power consumption device and a network device.

33. A transmission apparatus, comprising:
a transmission module, configured to perform an information transmission with a low-power consumption device on a Uu link band.

34. A low-power consumption device, comprising:
a processor;
a transceiver connected to the processor; and
a memory for storing executable instructions of the processor,
wherein the low-power consumption device is configured to perform an information transmission on a Uu link band.

35. The low-power consumption device according to claim 34, wherein the low-power consumption device is configured to:
send information on at least one of a Uu uplink (UL) band or a Uu downlink (DL) band, and/or, receive the information on at least one of the Uu UL band or the Uu DL band.

36. The low-power consumption device according to claim 35, wherein the low-power consumption device is configured to:
send the information on the Uu UL band in a case where the low-power consumption device has a first capability.

37. The low-power consumption device according to claim 36, wherein the low-power consumption device is configured to perform at least one of:
sending the information to a network device on the Uu UL band; or
sending the information to an intermediate node on the Uu UL band, the intermediate node having a second capability,
wherein the intermediate node comprises a node between the low-power consumption device and the network device.

38. The low-power consumption device according to any one of claims 35 to 37, wherein the low-power consumption device is configured to:
send the information on the Uu DL band in a case where the low-power consumption device has a third capability.

39. The low-power consumption device according to claim 38, wherein the low-power consumption device is configured to:
send the information to an intermediate node on the Uu DL band, the intermediate node having a fourth capability,
wherein the intermediate node comprises a node between the low-power consumption device and the network device.

40. The low-power consumption device according to any one of claims 35 to 39, wherein the low-power consumption device is configured to perform at least one of:
receiving the information on the Uu DL band in a case where the low-power consumption device has a fifth capability; or
receiving the information on the Uu UL band in a case where the low-power consumption device has a sixth capability.

41. The low-power consumption device according to claim 40, wherein the low-power consumption device is configured to:
receive, on the Uu DL band, the information sent by a network device.

42. The low-power consumption device according to claim 40 or 41, wherein the low-power consumption device is configured to:
receive, on the Uu UL band, the information sent by an intermediate node, the intermediate node having a seventh capability,
wherein the intermediate node comprises a node between the low-power consumption device and a network device.

43. The low-power consumption device according to any one of claims 34 to 42, wherein the low-power consumption device is configured to:
send information on a first band in a case where the low-power consumption device has an eighth capability,
wherein the first band comprises at least one of a guard band or a standalone band.

44. The low-power consumption device according to claim 43, wherein the low-power consumption device is configured to perform at least one of:
sending the information to a network device on the first band, the network device having a ninth capability; or
sending the information to an intermediate node on the first band, the intermediate node having a tenth capability,
wherein the intermediate node comprises a node between the low-power consumption device and the network device.

45. The low-power consumption device according to any one of claims 34 to 44, wherein the low-power consumption device is configured to:
receive information on a first band in a case where the low-power consumption device has an eleventh capability,
wherein the first band comprises at least one of a guard band or a standalone band.

46. The low-power consumption device according to claim 45, wherein the low-power consumption device is configured to perform at least one of:
receiving, on the first band, the information sent by a network device, the network device having a twelfth capability; or
receiving, on the first band, the information sent by an intermediate node, the intermediate node having a thirteenth capability,
wherein the intermediate node comprises a node between the low-power consumption device and the network device.

47. The low-power consumption device according to any one of claims 34 to 46, wherein a capability of the low-power consumption device is notified to an intermediate node and/or a network device via higher-layer signaling,
wherein the capability of the low-power consumption device is used to indicate a band on which the low-power consumption device performs the information transmission, and the intermediate node comprises a node between the low-power consumption device and the network device.

48. The low-power consumption device according to any one of claims 34 to 47, wherein the information comprises at least one of signaling or data.

49. An intermediate node, comprising:
a processor;
a transceiver connected to the processor; and
a memory for storing executable instructions of the processor,
wherein the intermediate node is configured to perform an information transmission with a low-power consumption device on a Uu link band,
wherein the intermediate node comprises a node between the low-power consumption device and a network device.

50. The intermediate node according to claim 49, wherein the intermediate node is configured to:
receive, on a Uu uplink (UL) band, information sent by the low-power consumption device, in a case where the intermediate node has a second capability, wherein the low-power consumption device has a first capability.

51. The intermediate node according to claim 49 or 50, wherein the intermediate node is configured to:
receive, on a Uu downlink (DL) band, information sent by the low-power consumption device, in a case where the intermediate node has a fourth capability, wherein the low-power consumption device has a third capability.

52. The intermediate node according to any one of claims 49 to 51, wherein the intermediate node is configured to:
send information to the low-power consumption device on a Uu UL band, in a case where the intermediate node has a seventh capability, wherein the low-power consumption device has a sixth capability.

53. The intermediate node according to any one of claims 49 to 52, wherein the intermediate node is configured to:
receive, on a first band, information sent by the low-power consumption device, in a case where the intermediate node has a tenth capability, the low-power consumption device having an eighth capability,
wherein the first band comprises at least one of a guard band or a standalone band.

54. The intermediate node according to any one of claims 49 to 53, wherein the intermediate node is configured to:
send information to the low-power consumption device on a first band, in a case where the intermediate node has a thirteenth capability, the low-power consumption device having an eleventh capability,
wherein the first band comprises at least one of a guard band or a standalone band.

55. The intermediate node according to any one of claims 49 to 54, wherein a capability of the low-power consumption device is notified to the intermediate node via higher-layer signaling,
wherein the capability of the low-power consumption device is used to indicate a band on which the low-power consumption device performs the information transmission.

56. The intermediate node according to any one of claims 49 to 55, wherein the information comprises at least one of signaling or data.

57. A network device, comprising:
a processor;
a transceiver connected to the processor; and
a memory for storing executable instructions of the processor,
wherein the network device is configured to perform an information transmission with a low-power consumption device on a Uu link band.

58. The network device according to claim 57, wherein the network device is configured to:
receive, on a Uu uplink (UL) band, information sent by the low-power consumption device, the low-power consumption device having a first capability.

59. The network device according to claim 57 or 58, wherein the network device is configured to:
send information to the low-power consumption device on a Uu downlink (DL) band, the low-power consumption device having a fifth capability.

60. The network device according to any one of claims 57 to 59, wherein the network device is configured to:
receive, on a first band, information sent by the low-power consumption device, in a case where the network device has a ninth capability, the low-power consumption device having an eighth capability,
wherein the first band comprises at least one of a guard band or a standalone band.

61. The network device according to any one of claims 57 to 60, wherein the network device is configured to:
send information to the low-power consumption device on a first band, in a case where the network device has a twelfth capability, the low-power consumption device having an eleventh capability,
wherein the first band comprises at least one of a guard band or a standalone band.

62. The network device according to any one of claims 57 to 61, wherein a capability of the low-power consumption device is notified to the network device via higher-layer signaling,
wherein the capability of the low-power consumption device is used to indicate a band on which the low-power consumption device performs the information transmission.

63. The network device according to any one of claims 57 to 62, wherein the information comprises at least one of signaling or data.

64. A computer-readable storage medium, having stored therein executable instructions, wherein the executable instructions are loaded and executed by a processor to implement the transmission method according to any one of claims 1 to 30.

65. A chip, comprising a programmable logic circuit or a program, wherein the chip is configured to implement, based on the programmable logic circuit or the program, the transmission method according to any one of claims 1 to 30.

66. A computer program product, comprising computer instructions stored in a computer-readable storage medium, wherein a processor of a computer device reads the computer instructions from the computer-readable storage medium and executes the computer instructions to enable the computer device to perform the transmission method according to any one of claims 1 to 30.
